(19) Europäisches Patentamt
European Patent Office
Office européen des brevets

(11) EP 1 384 758 A1

(12) **EUROPEAN PATENT APPLICATION**
published in accordance with Art. 158(3) EPC

(43) Date of publication:
**28.01.2004 Bulletin 2004/05**

(21) Application number: **03701113.7**

(22) Date of filing: **17.01.2003**

(51) Int Cl.[7]: **C09D 5/02**, C09D 5/29, C09D 133/04

(86) International application number:
**PCT/JP2003/000385**

(87) International publication number:
**WO 2003/064546 (07.08.2003 Gazette 2003/32)**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **25.01.2002 JP 2002017494**
**25.01.2002 JP 2002017495**
**26.06.2002 JP 2002186793**
**26.06.2002 JP 2002186794**

(71) Applicant: **Nippon Paint Co., Ltd.**
**Osaka-shi, Osaka 531-8511 (JP)**

(72) Inventors:
- **SASAKI, Shigeyuki**
  **Nara-shi, Nara 631-0041 (JP)**
- **OGAWA, Hideaki**
  **Sakai-shi, Osaka 591-8021 (JP)**
- **SEO, Shinji**
  **Uji-shi, Kyoto 611-0011 (JP)**
- **NISHI, Tadahiko**
  **Yamatokoriyama-shi, Nara 639-1131 (JP)**

(74) Representative: **Kilian, Helmut, Dr.**
**Wilhelms, Kilian & Partner**
**Patentanwälte**
**Eduard-Schmid-Strasse 2**
**81541 München (DE)**

(54) **WATER-BASED COATING COMPOSITION AND METHOD OF FORMING LAYERED COATING FILM**

(57) The present invention provides an aqueous coating composition wherein the resulting coating film has good visual appearance and excellent flip-flop properties, and a method for formation of a multilayer coating film. The aqueous coating composition comprising: an aqueous resin dispersion which is obtained by solution-polymerizing a monomer mixed solution A having an acid value of 30 to 150 and a hydroxyl group value of 10 to 100 in an organic solvent, thereby to synthesize a copolymer solution, converting the copolymer solution into an aqueous solution, removing the organic solvent under reduced pressure to obtain an aqueous solution resin for emulsion polymerization, and then emulsion-polymerizing a monomer mixed solution B having an acid value of 20 as an upper limit and a hydroxyl group value of 100 as an upper limit using the aqueous solution resin for emulsion polymerization as a protective colloid, thereby to synthesize a core resin in the protective colloid; and a glitter material. The aqueous solution resin for emulsion polymerization may be obtained by the aqueous solution polymerization of the monomer mixed solution A in water.

EP 1 384 758 A1

## Description

TECHNICAL FIELD

The present invention relates to an aqueous coating composition and a method for formation of a multilayer coating film and, more particularly, to an aqueous coating composition for coating on bodies of automobiles and the like and to a method for formation of a multilayer coating film formed on bodies of automobiles and the like.

BACKGROUND ART

A conventional coating material for industrial use was a so-called solvent-borne coating material using an organic solvent as a diluting solvent and, therefore, the coating material contained a large amount of the organic solvent. However, there has recently been developed an aqueous coating material using, as the diluting solvent, water reducing the organic solvent taking the environment into consideration. As such an aqueous coating material, for example, Japanese Laid-open Patent Publication No. 7-53913 discloses an aqueous coating composition comprising: a resin which is obtained by neutralizing at least a portion of a polymer containing an amide group-containing ethylenically unsaturated monomer, an acid group-containing ethylenically unsaturated monomer and a hydroxyl group-containing ethylenically unsaturated monomer; and a water dispersion of carboxyl group-containing acrylic resin particles.

A coating film obtained from a conventional aqueous coating material generally had a problem that smoothness and appearance are inferior to a conventional solvent-borne coating material. Particularly, a coating film obtained from an aqueous coating material, which contains a glitter material as a coloring component used for bodies of automobiles required excellent appearance, is drastically inferior in visual appearance and flip-flop properties to the solvent-borne base coating material.

DISCLOSURE OF THE INVENTION

Object of the Invention

An object of the present invention is to provide an aqueous coating composition wherein the resulting coating film has good visual appearance and excellent flip-flop properties, and a method for formation of a multilayer coating film.

Summary of the Invention

The present invention is directed to an aqueous coating composition comprising:

an aqueous resin dispersion, which is obtained by solution-polymerizing a monomer mixed solution A having an acid value of 30 to 150 and a hydroxyl group value of 10 to 100 in an organic solvent, thereby to synthesize a copolymer solution, converting the copolymer solution into an aqueous solution, removing the organic solvent under reduced pressure to obtain an aqueous solution resin for emulsion polymerization, and then emulsion-polymerizing a monomer mixed solution B having an acid value of 20 as an upper limit and a hydroxyl group value of 100 as an upper limit using the aqueous solution resin for emulsion polymerization as a protective colloid, thereby to synthesize a core resin in the protective colloid; and
a glitter material.

The present invention is also directed to the aforementioned aqueous coating composition, which contains at least one kind of a urethane-type compound represented by the following general formula (1) or (2):

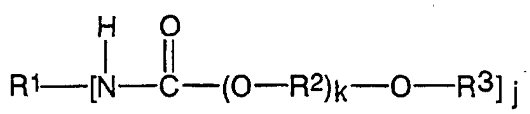
(1)

(in the formula (1), $R^1$, $R^2$ and $R^3$ represent a hydrocarbon groups which may be the same as and different from each other, $R^1$ represents a hydrocarbon group which may have a urethane bond, $R^3$ represents a branched or secondary hydrocarbon group, j represents a number of not less than 1, and k represents a number in a range from 1 to 500),

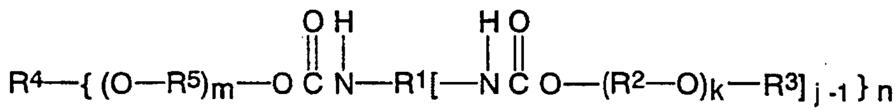 (2)

(in the formula (2), $R^1$, $R^2$, $R^3$, $R^4$ and $R^5$ represent a hydrocarbon groups which may be the same as and different from each other, $R^1$ represents a hydrocarbon group which may have a urethane bond, $R^3$ represents a branched or secondary hydrocarbon group, n represents a number of not less than 2, j represents a number of not less than 2, and k and m each represents a number in a range from 1 to 500), wherein the solid content of the urethane-type compound is from 0.01 to 20% by weight based on the solid content of the resin in the coating composition.

The present invention is directed to the aforementioned aqueous coating composition, wherein the monomer mixed solution A and the monomer mixed solution B respectively contain at least one kind of a polymerizable unsaturated monomer selected from the group consisting of (meth)acrylates, styrenic monomers, (meth)acrylonitrile and (meth)acrylamide.

The present invention is directed to the aforementioned aqueous coating composition, wherein a weight Aw of the monomer mixed solution A and a weight Bw of the monomer mixed solution B satisfy the following relationship:

$$10/100 \leq Aw/(Aw + Bw) \leq 50/100.$$

The present invention is directed to the aforementioned aqueous coating composition, wherein the monomer mixed solution A further contains a cross-linkable monomer as a copolymerization component.

The present invention is directed to the aforementioned aqueous coating composition, wherein the monomer mixed solution B further contains a cross-linkable monomer as a copolymerization component.

The present invention is further directed to the aforementioned aqueous coating composition, which further contains a polyether polyol having a primary hydroxyl group in the number of not less than 0.02 on average in a molecule, a number average molecular weight of 300 to 3,000 and a water tolerance value of not less than 2.0. The present invention is directed to the aforementioned aqueous coating composition, wherein the polyether polyol has at least one primary hydroxyl group in a molecule and a hydroxyl group value of 30 to 700.

The present invention is also directed to a method for formation of a multilayer coating film, which comprises: coating an aqueous base coating material on a material to be coated to form a base coating film; coating a clear coating material on the base coating film to form a clear coating film; and curing both of the coating films with heating, wherein the aqueous base coating material is any of the aforementioned aqueous coating compositions.

The present invention is further directed to a multilayer coating film formed by the aforementioned method.

The present invention is directed to an aqueous coating composition comprising:

an aqueous resin dispersion which is obtained by aqueous solution-polymerizing a monomer mixed solution A having an acid value of 30 to 150 and a hydroxyl group value of 10 to 100 in water to obtain an aqueous solution resin for emulsion polymerization, and then
emulsion-polymerizing a monomer mixed solution B having an acid value of 20 as an upper limit and a hydroxyl group value of 100 as an upper limit using the aqueous solution resin for emulsion polymerization as a protective colloid, thereby to synthesize a core resin in the protective colloid; and
a glitter material.

The present invention is also directed to the aforementioned aqueous coating composition, which further contains at least one kind of a urethane-type compound represented by the following general formula (1) or (2):

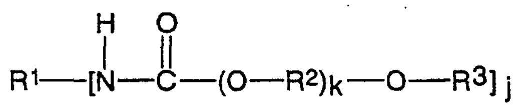 (1)

(in the formula (1), $R^1$, $R^2$ and $R^3$ represent a hydrocarbon groups which may be the same as and different from each other, $R^1$ represents a hydrocarbon group which may have a urethane bond, $R^3$ represents a branched or secondary hydrocarbon group, j represents a number of not less than 1, and k represents a number in a range from 1 to 500),

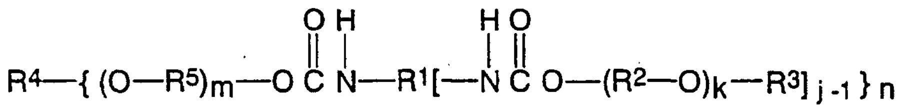 (2)

(in the formula (2), $R^1$, $R^2$, $R^3$, $R^4$ and $R^5$ may the same as and different from each other and represent a hydrocarbon group, $R^1$ represents a hydrocarbon group which may have a urethane bond, $R^3$ represents a branched or secondary hydrocarbon group, n represents a number of not less than 2, j represents a number of not less than 2, and k and m each represents a number in a range from 1 to 500), wherein the solid content of the urethane-type compound is from 0.01 to 20% by weight based on the solid content of the resin in the coating composition.

The present invention is directed to the aforementioned aqueous coating composition, wherein the monomer mixed solution A and the monomer mixed solution B respectively contain at least one kind of a polymerizable unsaturated monomer selected from the group consisting of (meth)acrylates, styrenic monomers, (meth)acrylonitrile and (meth)acrylamide.

The present invention is directed to the aforementioned aqueous coating composition, wherein a weight Aw of the monomer mixed solution A and a weight Bw of the monomer mixed solution B satisfy the following relationship:

$$10/100 \leq Aw/(Aw + Bw) \leq 50/100.$$

The present invention is directed to the aforementioned aqueous coating composition, wherein the monomer mixed solution A further contains a cross-linkable monomer as a copolymerization component.

The present invention is directed to the aforementioned aqueous coating composition, wherein the monomer mixed solution B further contains a cross-linkable monomer as a copolymerization component.

The present invention is directed to the aforementioned aqueous coating composition, which further contains a polyether polyol having a primary hydroxyl group in the number of not less than 0.02 on average in a molecule, a number average molecular weight of 300 to 3,000 and a water tolerance value of not less than 2.0. The present invention is directed to the aforementioned aqueous coating composition, wherein the polyether polyol has at least one primary hydroxyl group in a molecule and a hydroxyl group value of 30 to 700.

The present invention is also directed to a method for formation of a multilayer coating film, which comprises: coating an aqueous base coating material on a material to be coated to form a base coating film; coating a clear coating material on the base coating film to form a clear coating film; and curing both of the coating films with heating, wherein the aqueous base coating material is any of the aforementioned aqueous coating compositions.

The present invention is further directed to a multilayer coating film formed by the aforementioned method.

MODES FOR CARRYING OUT THE INVENTION

First, an aqueous coating composition of the present invention will be described.

The aqueous coating composition of the present invention contains an aqueous resin dispersion which is obtained by using an aqueous solution resin for emulsion polymerization as a protective colloid to synthesize a core resin in the protective colloid, and a glitter material.

The aqueous resin dispersion contained in the aqueous coating composition of the present invention is obtained by using an aqueous solution resin for emulsion polymerization as a protective colloid to synthesize a core resin in the protective colloid.

The aqueous resin dispersion is obtained, for example, by preparing an aqueous solution resin for emulsion polymerization and using the aqueous solution resin for emulsion polymerization as a protective colloid to synthesize a core resin in the protective colloid.

The method of preparing the aqueous solution resin for emulsion polymerization includes two methods.

The first method of preparing the aqueous solution resin for emulsion polymerization will be described below.

In the process of preparing the aqueous solution resin for emulsion polymerization, a monomer mixed solution A having an acid value of 30 to 150 and a hydroxyl group value of 10 to 100 is solution-polymerized in an organic solvent to obtain a copolymer solution, and then the copolymer solution is converted into an aqueous solution and the organic solvent is removed under reduced pressure.

The method of the solution polymerization is not specifically limited and is conducted by a conventional method and includes, for example, a method of polymerizing in the presence of a radical polymerization initiator while adding dropwise the monomer mixed solution A in an organic solvent.

The monomer mixed solution A has an acid value of 30 as a lower limit and of 150 as an upper limit, and preferably from 40 as a lower limit to 130 as an upper limit, and also has a hydroxyl group value in a range from 10 as a lower limit to 100 as an upper limit, and preferably from 30 as a lower limit to 80 as an upper limit. The acid value less than 30 causes insufficient thickening in the case where an alkali is added to the resulting aqueous resin dispersion, and thus the expected viscosity and structural viscosity are not obtained, while the acid value exceeding 150 impairs the water resistance of the resulting coating film after converting into a coating material. The hydroxyl group value less than 10 causes insufficient curability of the resulting coating film after converting into a coating material, while the hydroxyl group value exceeding 100 impairs the compatibility with the other component such as curing agent, resulting in non-uniform coating film.

The acid value and the hydroxyl group value as used herein refer to values obtained by calculating from an amount of each polymerizable unsaturated monomer contained in the monomer mixed solution.

The monomer mixed solution A contains an acid group-containing polymerizable unsaturated monomer and a hydroxyl group-containing polymerizable unsaturated monomer as an essential component and optionally contains the other polymerizable unsaturated monomer.

The acid group-containing polymerizable unsaturated monomer is a compound having not less than one unsaturated double bonds and acid groups in one molecule, respectively, and may include, for example, a carboxyl group-containing polymerizable unsaturated monomers such as acrylic acid, methacrylic acid, crotonic acid, propylacrylic acid, isopropylacrylic acid, itaconic acid, maleic anhydride, fumaric acid; a sulfonate group-containing polymerizable unsaturated monomers such as t-butylacrylamidesulfonic acid; a phosphate group-containing polymerizable unsaturated monomers such as Light Ester PM (manufactured by Light Ester Co., Ltd.). Two or more kinds of these may be used.

Examples of the hydroxyl group-containing polymerizable unsaturated monomer may include, for example, 2-hydroxyethyl acrylate, 2-hydroxyethyl methacrylate, hydroxypropyl acrylate, hydroxypropyl methacrylate, hydroxybutyl acrylate, hydroxybutyl methacrylate, N-methylol acrylamide, allyl alcohol, ε-caprolactone-modified acrylic monomer such as PLACCEL FA series and PLACCEL FM series (both manufactured by Daicel Chemical Industries Ltd.). Two or more kinds of these may be used.

For the other polymerizable unsaturated monomer, for example, a monoester of a monohydric alcohol having 1 to 24 carbon atoms with acrylic acid or methacrylic acid may be preferably used and may include, for example, (meth) acrylates such as methyl (meth)acrylate, ethyl (meth)acrylate, propyl (meth)acrylate, n-butyl (meth)acrylate, isobutyl (meth)acrylate, t-butyl (meth)acrylate, 2-ethylhexyl (meth)acrylate, n-octyl (meth)acrylate, lauryl (meth)acrylate, stearyl (meth)acrylate; styrenic monomer such as styrene and α-methylstyrene; (meth)acrylonitrile; and (meth)acrylamide. Two or more kinds of these may be used.

Examples of the organic solvent is not specifically limited and may include an ester-type solvent such as ethyl acetate, n-butyl acetate, isobutyl acetate, methylcellosolve acetate and butylcarbitol acetate; a lower alcohol-type solvent such as methanol, ethanol, isopropanol, n-butanol, see-butanol and isobutanol; an ether-type solvent such as n-butyl ether, dioxane, ethylene glycol monomethyl ether, ethylene glycol monoethyl ether, propylene glycol monomethyl ether and propylene glycol monoethyl ether.

Examples of the radical polymerization initiator is not specifically limited and may include a peroxide-type compound such as t-butyl hydroperoxide, t-butyl peroxy-2-ethoxyhexanoate; and an azo-type compound such as azobisisobutyronitrile, azobis(2-methylbutyronitrile) and azobisdimethyl-valeronitrile.

Subsequently, the resulting copolymer solution is converted into an aqueous solution and the organic solvent is removed under reduced pressure. The above conversion method is not specifically limited and includes, for example, a method of neutralizing an acid group contained in the copolymer with a neutralizing base and then adding water, thereby to dissolve the resin into water. Examples of the neutralizing basic compound is not specifically limited and may include, for example, monomethylamine, dimethylamine, trimethylamine, monoethylamine, triethylamine, monoisopropylamine, diethylene triamine, triethylene triamine, triethylene tetramine, monoethanolamine, diethanolamine, triethanolamine, monoisopropanolamine, diisopropanolamine, dimethylethanolamine, 2-aminomethylpropanol, morpholin, methylmorpholin, piperazine, ammonia, sodium hydroxide, potassium hydroxide, lithium hydroxide and the like.

As the method for removing the organic solvent under reduced pressure, a conventional vacuum distillation method may be used, for example, under reduced pressure of 50 to 200 mmHg at a temperature of 40 to 80°C for 1 to 10 hours. It is preferred that the organic solvent is removed almost completely.

The weight average molecular weight of the aqueous solution resin for emulsion polymerization thus obtained is not specifically limited but usually about 10,000 to 50,000, for example, about 20,000 to 30,000.

The second method of preparing the aqueous solution resin for emulsion polymerization will be described below.

In the process of preparing the aqueous solution resin for emulsion polymerization, a monomer mixed solution A having an acid value of 30 to 150 and a hydroxyl group value of 10 to 100 is aqueous solution-polymerized in water. The method of the aqueous solution polymerization is not specifically limited and is conducted by a conventional method

and includes, for example, a method of polymerizing in the presence of a radical polymerization initiator while adding dropwise the monomer mixed solution A in water.

The monomer mixed solution A has an acid value of 30 as a lower limit and of 150 as an upper limit, and preferably of 40 as a lower limit and of 130 as an upper limit, and also has a hydroxyl group value of 10 as a lower limit and of 100 as an upper limit, and preferably of 30 as a lower limit and of 80 as an upper limit. The acid value less than 30 causes insufficient thickening in the case where an alkali is added to the resulting resin dispersion, and thus the expected viscosity and structural viscosity are not obtained, while the acid value exceeding 150 impairs the water resistance of the resulting coating film after converting into a coating material. The hydroxyl group value less than 10 causes insufficient curability of the resulting coating film after converting into a coating material, while the hydroxyl group value exceeding 100 impairs the compatibility with the other component such as curing agent, resulting in non-uniform coating film.

The monomer mixed solution A contains the above-mentioned acid group-containing polymerizable unsaturated monomer and the above-mentioned hydroxyl group-containing polymerizable unsaturated monomer as an essential component and optionally contains the above-mentioned other polymerizable unsaturated monomer. Therefore, one kind or two or more kinds of the above-mentioned acid group-containing polymerizable unsaturated monomers are used and one kind or two or more kinds of the above-mentioned hydroxyl group-containing polymerizable unsaturated. monomers are used, and one kind or two or more kinds of the above-mentioned other polymerizable unsaturated monomers are optionally used.

The radical polymerization initiator includes those which are commonly used in the aqueous solution polymerization of an acrylic resin, and specific examples thereof include a peroxide-type compound such as t-butyl hydroperoxide or t-butylperoxy-2-ethoxyhexanoate; and an azo-type compound such as azobisisobutyronitrile or azobisdimethylvaleronitrile. As a water-soluble free radical polymerization initiator, a persulfate such as potassium persulfate, sodium persulfate or ammonium persulfate may be used alone or in combination with hydrogen peroxide and a reducing agent such as acidic sodium sulfite, sodium thiosulfate, Rongalite or ascorbic acid, which is referred to as a redox initiator, each being used in the form of an aqueous solution.

In the preparation of the aqueous solution resin for emulsion polymerization, surfactants, hydrophilic oligomers, polymers and chain transfer agents may be optionally used.

The aqueous solution resin for emulsion polymerization thus obtained may be used as it is, as the protective colloid in the emulsion polymerization of the core resin, and also may be used after neutralizing a portion of acid groups in the resin. Example of the basic compound for the neutralizing may include monomethylamine, dimethylamine, trimethylamine, monoethylamine, triethylamine, monoisopropylamine, diethylene triamine, triethylene triamine, triethylene tetramine, monoethanolamine, diethanolamine, triethanolamine, monoisopropanolamine, diisopropanolamine, dimethylethanolamine, 2-aminomethylpropanol, morpholin, methylmorpholin, piperazine, ammonia, sodium hydroxide, potassium hydroxide, lithium hydroxide and the like.

The weight average molecular weight of the aqueous solution resin for emulsion polymerization thus obtained is not limited particularly but usually about 10,000 to 50,000, for example, about 20,000 to 30,000.

In the process of preparing the aqueous resin dispersion, the monomer mixed solution B is emulsion-polymerized using the aqueous solution resin for emulsion polymerization obtained by any method described above, thereby to synthesize a core resin in the protective colloid.

As the method of the emulsion polymerization, there may be described a method of adding dropwise the monomer mixed solution B in the presence of the aqueous solution resin for emulsion polymerization and the free radical polymerization initiator. The monomer mixed solution B has an acid value of 20 as an upper limit, and preferably 10 as an upper limit, and also has a hydroxyl group value of 100 as an upper limit, and preferably of 20 as a lower limit and of 70 as an upper limit. The acid value exceeding 20 causes a large change with the passage of time in viscosity of the dispersion after thickening the resulting aqueous resin dispersion as a result of the addition of an alkali, resulting in poor stability. The hydroxyl group value exceeding 100 impairs the water resistance of the resulting coating film after converting into a coating material and also impairs the compatibility with the other component such as curing agent, resulting in non-uniform coating film.

Like the monomer mixed solution A, the monomer mixed solution B contains the above-mentioned acid group-containing polymerizable unsaturated monomer, the above-mentioned hydroxyl group-containing polymerizable unsaturated monomer and the above-mentioned other polymerizable unsaturated monomer. Unlike the monomer mixed solution A, the monomer mixed solution B may not necessarily contain the above-mentioned acid group-containing polymerizable unsaturated monomer and the above-mentioned hydroxyl group-containing polymerizable unsaturated monomer. The monomer mixed solution B may optionally contain chain transfer agents.

Example of the free radical polymerization initiator may include a persulfate which is decomposed in water to form a free radical, such as potassium persulfate, sodium persulfate and ammonium persulfate; or in combination with these and hydrogen peroxide and a reducing agent such as acidic sodium sulfite, sodium thiosulfate, Rongalit and ascorbic acid, which is referred to as a redox initiator.

In the emulsion polymerization, in addition to the aqueous solution for emulsion polymerization, other emulsifier may be used as an aid. Example of the other emulsifier may include an anionic or non-ionic emulsifier which is selected from micelle compounds each having, in its molecule, a hydrocarbon group having not less than 6 carbon atoms and a hydrophilic part such as carboxylate, sulfonate or sulfate partial ester. Among such compounds, examples of the anionic emulsifier may include an alkaline metal salt or ammonium salt of a halfester of sulfuric acid with alkylphenols or higher alcohols; an alkaline metal salt or ammonium salt of an alkyl- or allyl-sulfonate; an alkaline metal salt or ammonium salt of a halfester of sulfuric acid with a polyoxyethylene alkylphenyl ether, polyoxyethylene alkyl ether or polyoxyethylene allyl ether and the like. Examples of the non-ionic emulsifier may include polyoxyethylene alkyl phenyl ether, polyoxyethylene alkyl ether or polyoxyethylene allyl ether and the like. In addition to these ordinary and commonly used anionic and non-ionic emulsifier, any of various anionic or non-ionic reactive emulsifier having in its molecule a radically polymerizable unsaturated double bond, i.e., having an acryl-, methacryl-, propenyl-, allyl-, allyl ether-, maleate-type groups may be used alone or in combination with each other.

The weight average molecular weight of the core resin thus obtained is not limited particularly but usually 50,000 to 1,000,000, for example 100,000 to 1,000,000.

In the aqueous resin dispersion, the respective polymerizable unsaturated monomers are preferably used so that a weight Aw of the monomer mixed solution A and a weight Bw of the monomer mixed solution B satisfy the following relationship:

$$10/100 \leq Aw/(Aw + Bw) \leq 50/100.$$

The value of Aw/(Aw + Bw) less than the range specified above may cause insufficient alkali thickening properties of the resulting aqueous resin dispersion, while the value more than the range specified above may impair the water resistance of the coating film obtained after converting into a coating material, although sufficient alkali thickening properties are obtained. More preferably, they satisfy the following relationship:

$$20/100 \leq Aw/(Aw + Bw) \leq 40/100.$$

In the present invention, in either or both of the monomer mixed solution A and the monomer mixed solution B may also preferably contain a cross-linkable monomer as a further copolymerization component in addition to the above described acid group-containing polymerizable unsaturated monomer, the above described hydroxy group-containing polymerizable unsaturated monomer, and the above described other polymerizable unsaturated monomer. The resin is imparted with a cross-linking structure by copolymerizing a cross-linkable monomer, or imparted with the cross-linking structure by the reaction with cross-linking auxiliary agent upon forming coating film depending on the type of the cross-linkable monomer, resulting in a highly solvent-resistance coating film.

An increased solvent resistance of the coating film is highly beneficial. For example, in a case where an aqueous resin dispersion of the present invention is utilized as an aqueous base coating material in the formation of multilayer coating film on an automobile and the like, a clear coating material is coated on the base coating film once formed, and the surface of this base coating film can avoid any impairment or denatured layer formation owing to the solvents contained in the clear coating material and thus can reduce the interlayer diffused reflection between the base coating film and clear coating film, resulting in a multilayer coating film with an excellent appearance. An aqueous resin dispersion of the present invention can also be utilized in various usages involving exposure to or contact with a solvent.

For the cross-linkable monomer, a cross-linkable monomer having a polymerizable unsaturated group such as a carbonyl group-containing monomer, hydrolyzable silyl group-containing monomer, glycidyl group-containing monomer and any of various polyfunctional vinyl monomers may be used. N-Methylol (meth)acrylamide and N-methoxymethyl (meth)acrylamide are also cross-linkable, but to a rather less extent.

An example of the carbonyl group-containing monomer may include a keto group-containing monomer such as acrolein, diacetone (meth)acrylamide, acetoacetoxyethyl (meth)acrylate, formylstyrol, a vinylalkyl ketone having 4 to 7 carbon atoms (for example, vinylmethyl ketone, vinylethyl ketone, vinylbutyl ketone) and the like. Among those listed above, diacetone (meth)acrylamide is preferred. When using such a carbonyl group-containing monomer, a hydrazine-type compound as a cross-linking auxiliary agent is added to an aqueous resin dispersion to form the cross-linking structure upon forming a coating film. Alternatively, the hydrazine-type compound may also be added after mixing the aqueous resin dispersion with a glitter material. The hydrazine-type compound may be added so that the aqueous coating composition of the present invention contains the hydrazine-type compound.

Examples of the hydrazine-type compound may include a saturated aliphatic carboxylic acid dihydrazide having 2 to 18 carbon atoms such as oxalic acid dihydrazide, malonic acid dihydrazide, glutaric acid dihydrazide, succinic acid dihydrazide, adipic acid dihydrazide and sebacic acid dihydrazide; a monoolefinic unsaturated dicarboxylic acid

dihydrazide such as maleic acid dihydrazide, fumaric acid dihydrazide and itaconic acid dihydrazide; phthalic acid dihydrazide, terephthalic acid dihydrazide, isophthalic acid dihydrazide and dihydrazide, trihydrazide or tetrahydrazide of pyromellitic acid; nitrile trihydrazide, citric acid trihydrazide, 1,2,4-benzene trihydrazide, ethylenediamine tetraacetic acid tetrahydrazide, 1,4,5,8-naphthoic acid tetrahydrazide and a polyhydrazide obtained by reacting an oligomer having a lower alkyl carboxylate group with hydrazine or hydrazine hydrate; carboxyl dihydrazide and bissemicarbazide; an aqueous polyfunctional semicarbazide obtained by reacting a diisocyanate such as hexamethylene diisocyanate and isophorone diisocyanate or a polyisocyanate compound derived therefrom with an excess of a hydrazine compound or dihydrazide listed above and the like.

An example of the hydrolyzable silyl group-containing monomer may include an alkoxysilyl group-containing monomer such as γ-(meth)acryloxypropylmethyldimethoxysilane, γ-(meth)acryloxypropylmethyldiethoxysilane, γ-(meth)acryloxypropyltriethoxysilane and the like.

Examples of the glycidyl group-containing monomer may include glycidyl (meth)acrylate, β-methylglycidyl (meth)acrylate, (3,4-epoxycyclohexyl)methyl (meth)acrylate, 3-chloro-2-hydroxypropyl (meth)acrylate and the like.

Examples of the polyfunctional vinylic monomer may include a divinyl compound such as divinylbenzene, ethylene glycol di(meth)acrylate, propylene glycol di(meth)acrylate, hexanediol di(meth)acrylate, diethylene glycol di (meth)acrylate, polyethylene glycol di(meth)acrylate, polypropylene glycol di(meth)acrylate, allyl (meth)acrylate, neopentyl glycol di(meth)acrylate and pentaerythritol di(meth)acrylate, and also include pentaerythritol tetra(meth)acrylate, trimethyrol propane tri(meth)acrylate, dipentaerythritol hexa(meth)acrylate and the like.

Any of the cross-linkable monomers listed above may be used alone or in combination with each other. Among the cross-linkable monomers listed above, carbonyl group-containing monomers and hydrolyzable silyl group-containing monomers are preferable at the point of the improving effect of the solvent resistance of a resultant coating film.

Both in the monomer mixed solution A and the monomer mixed solution B, when using the cross-linkable monomer, the cross-linkable monomer is used in a range of 0.5 to 10% by weight, preferably 1 to 8% by weight based on the total amount of the above described acid group-containing polymerizable unsaturated monomer, the above described hydroxy group-containing polymerizable unsaturated monomer, and the above described other polymerizable unsaturated monomer. With the amount of this range, it is possible to obtain a cross-linking structure of the resin A for emulsion polmerization or the core resin B and also to obtain the improving effect of solvent resistance of the coating film, although the amount may vary depending on the type of the monomers. An amount less than the range specified above may cause a difficulty in obtaining the improving effect of solvent resistance of the coating film, while an amount exceeding the range specified above may cause problematic gelling during the manufacturing process of the resins or may cause problematically irregular coating film even if there is no problem in the manufacturing processes of the resins.

The introduction of the cross-linking structure may be performed in both of the resins A for emulsion polymerization and the core resin B or in any one of them. In the case where the cross-linking structure is introduced into only one of the resins, when $Aw \leq Bw$, a higher improving effect of solvent resistance of the coating film can be obtained by introducing the cross-linking structure into the resin B than into the resin A. In the case where the cross-linking structure is introduced into both of the resins A and B, when a carbonyl group-containing monomer is used as a cross-linkable monomer, the cross-linking structure is formed readily even between the resins A and B as a result of the effect of a hydrazine-type compound upon forming a coating film. Thus the aqueous resin dispersion contained in the aqueous coating composition of the present invention may be obtained.

Furthermore, the aqueous coating composition of the present invention contains a glitter material. The glitter material imparts beautiful appearance and design properties to the resulting coating film. The shape of such a glitter material is not specifically limited, and the glitter material may be colored, but is preferably a scaly glitter material which has an average particle diameter ($D_{50}$) of 2 to 50 μm and a thickness of 0.1 to 5 μm. Also a glitter material having an average particle diameter in a range from 10 to 35 μm is more preferred because of its excellent glittering feeling. Specific examples thereof include non-colored or colored glitter materials made of metals such as aluminum, copper, zinc, iron, nickel, tin, aluminum oxide, and their alloys, and their mixture. Also interference mica pigments, white mica pigments and graphite pigments are included. The concentration of the glitter material is generally 18.0% by weight as an upper limit, preferably 0.01% by weight as a lower limit and 15.0% by weight as an upper limit, and more preferably 0.01% by weight as a lower limit and 13.0% by weight as an upper limit, based on the solid content of the coating material resin (solid content of the entire resin contained in the coating material).

In the case where the glitter material is a scaly glitter material, the aqueous coating composition of the present invention further contains a phosphate group-containing acrylic resin, preferably. This phosphate group-containing acrylic resin is an acrylic resin obtained by copolymerizing a polymerizable unsaturated monomer represented by the following general formula (3):

$$CH_2=CXCO(OY)_h—OPO(OH)_2 \quad (3)$$

(in the formula (3), X represents a hydrogen atom or a methyl group, Y represents an alkylene group having 2 to 4 carbon atoms, and h represents an integer of 3 to 30.), and other polymerizable unsaturated monomer.

The phosphate group-containing acrylic resin is used to satisfactorily disperse the scaly glitter material. The phosphate group-containing acrylic resin preferably has a number average molecular weight of 1,000 as a lower limit and of 50,000 as an upper limit. The number average molecular weight less than 1,000 may cause a difficulty in dispersing sufficiently the scaly glitter material, while the number average molecular weight exceeding 50,000 may cause an impairment of the appearance of the resulting coating film.

The phosphate group-containing acrylic resin preferably has a solid content acid value of 15 as a lower limit and of 200 as an upper limit. Among the acid value, the acid value due to a phosphate group is preferably 10 as a lower limit and 150 as an upper limit. The acid value less than 15 may cause a difficulty in dispersing sufficiently the scaly glitter material, while the acid value exceeding 200 may impair the storage stability of the aqueous coating composition. Furthermore, the phosphate group-containing acrylic resin may have a hydroxyl group value to secure the curability which is preferably 20 as a lower limit and 200 as an upper limit.

The amount of the phosphate group-containing acrylic resin is preferably in a range from 0.01 parts by weight as a lower limit to 5 parts as an upper limit, more preferably from 0.1 parts by weight as a lower limit to 4 parts by weight, and particularly preferably from 0.2 parts by weight as an lower limit to 3 parts by weight as an upper limit, based on 100 parts by weight of the solid content of the coating material. Too small content of the phosphate group-containing acrylic resin may impair various performances of the coating film, while too large content of the phosphate group-containing acrylic resin may impair the storage stability of the coating material.

Examples of the polymerizable unsaturated monomer represented by the general formula (3) include acid phosphoxyhexa(oxypropylene) monomethacrylate and acid phosphoxydodeca(oxypropylene) monomethacrylate. The other polymerizable unsaturated monomer is a polymerizable unsaturated monomer, which is copolymerizable with the polymerizable unsaturated monomer represented by the general formula (3), and two or more kinds of them may be used. To enable the resulting copolymer, that is, an acrylic resin to be cured with a curing agent, the other polymerizable unsaturated monomer may be a polymerizable unsaturated monomer having an acid group such as carboxyl acid group or sulfonic acid group, or a hydroxyl group.

In the case where the aqueous coating composition of the present invention contains a metal glitter material as a coloring component, the aqueous coating composition preferably contains a phosphate group-containing compound having an alkyl group as a corrosion inhibitor for the glitter material, or contains it so as to improve the wettability of the glitter material and to improve physical properties of the resulting multilayer coating film. The number of carbon atoms of the alkyl group is preferably in a range from 8 as a lower limit to 18 as an upper limit, and more preferably from 10 as a lower limit to 14 as an upper limit. The number of carbon atoms less than 8 may impairs the wettability, resulting in poor adhesion, while the number of carbon atoms exceeding 18 may cause deposition of a crystal of a compound in a coating material, resulting in problems.

A hydrophile-lipophile balance (HLB) is preferably in a range from 3 as a lower limit to 12 as an upper limit, and more preferably from 4 as a lower limit to 8 as an upper limit. The HLB deviating from the range specified above may impair the wettability. The HLB can be determined from the Griffin's formula (based on the weight fraction): HLB = 20 × (MH/M) [where MH represents a molecular weight of a hydrophilic group moiety and M represents a molecular weight of an active agent]. The molecular weight of the hydrophilic group moiety can be determined by using the molecular weights of phosphate, sulfonic acid and carboxylic acid.

Specific examples of such a compound may include 2-ethylhexyl acid phosphate, mono- or di-diisodecyl acid phosphate, mono- or di-tridecyl acid phosphate, mono- or di-lauryl acid phosphate, and mono- or di-nonylphenyl acid phosphate.

In the case where the aqueous coating composition of the present invention contains the above described compound, the content of the compound is preferably 0.1% by weight as a lower limit and 5% by weight as an upper limit, and more preferably 0.2% by weight as a lower limit and 2% by weight as an upper limit, based on the solid content of the coating material resin. The content less than 0.1% by weight may cause impairment of adhesion, while the content exceeding 5% by weight may cause impairment of the water resistance.

The aqueous coating composition of the present invention may contain a urethane-type compound represented by the general formula (1) or (2). Flip-flop properties of the resulting coating film can be further improved by containing the urethane-type compound. In the formula (1) or (2), $R^1$, $R^2$, $R^3$, $R^4$ and $R^5$ represent a hydrocarbon groups which may be the same as and different from each other, $R^1$ represents a hydrocarbon group which may have a urethane bond, $R^3$ represents a branched or secondary hydrocarbon group, n represents a number of not less than 2, j represents a number of not less than 1 in the general formula (1) and a number of not less than 2 in the general

formula (2), and k and m each represents a number in a range from 1 to 500.

The urethane-type compound represented by the general formula (1) may be obtained, for example, by reacting one kind or two or more kinds of aliphatic, aromatic and alicyclic mono- or polyisocyanates represented by $R^1$-$(NCO)_j$ and one kind or two or more kinds of polyether monoalcohols represented by HO-$(R^2$-$O)_k$-$R^3$ as raw materials. In this case, $R^1$ to $R^3$ in the formula are decided by the above formulas $R^1$-$(NCO)_j$ and HO-$(R^2$-$O)_k$-$R^3$.

The method of preparing the urethane-type compound represented by the general formula (1) includes, for example, a method of mixing the mono- or polyisocyanate represented by $R^1$-$(NCO)_j$ with the polyether monoalcohol represented by HO-$(R^2$-$O)_k$-$R^3$ so that a ratio of a hydroxyl group value to an isocyanate value from the respective compounds is in a range from 1.05/1 to 1.4/1 and reacting the mixture at 80 to 90°C for 1 to 3 hours in the same manner as in the case of a conventional reaction between a polyether and an isocyanate.

The urethane-type compound represented by the general formula (2) may be obtained, for example, by reacting a polyisocyanate represented by $R^1$-$(NCO)_j$ wherein j is not less than 2, among the mono- or polyisocyanate represented by $R^1$-$(NCO)_j$ as a raw material to obtain the general formula (1), which has j of not less than 2 ;and a polyether monoalcohol represented by HO-$(R^2$-$O)_k$-$R^3$; and further one kind or two or more kinds of polyether polyols represented by $R^4$-$[(O$-$R^5)_m$-$OH]_n$ as raw materials. In this case, $R^1$ to $R^5$ in the formula are decided by the formulas $R^4$-$[(O$-$R^5)_m$-$OH]_n$, $R^1$-$(NCO)_j$ and HO-$(R^2$-$O)_k$-$R^3$.

The polyisocyanate represented by $R^1$-$(NCO)_j$ wherein j is not less than 2 among the mono- or polyisocyanate represented by $R^1$-$(NCO)_j$ has two or more isocyanate groups in a molecule and specific examples thereof include polyisocyanates represented by $R^1$-$(NCO)_j$ (wherein j is not less than 2) described as for the general formula (1).

The polyether monoalcohol represented by HO-$(R^2$-$O)_k$-$R^3$ is not specifically limited as far as it is a polyether of a branched or secondary monohydric alcohol. Specific examples thereof include those described as for the general formula (1).

Examples of the polyether polyol represented by $R^4$-$[(O$-$R^5)_m$-$OH]_n$ may include those described below for polyether polyols. $R^5$ is decided by an alkylene oxide, styrene oxide or the like to be added, and an alkylene oxide or styrene oxide having 2 to 4 carbon atoms is preferred in view of industrial availability. The alkylene oxide, styrene oxide or the like to be added may be those obtained by homopolymerization, copolymerization or block polymerization of two or more kinds. The polymerization degree m is preferably in a range from 1 to 500, more preferably from 1 to 200, and still more preferably from 10 to 200. The proportion of an ethylene group in $R^5$ is preferably in a range from 50 to 100% by weight, and more preferably from 65 to 100% by weight, based on the entire $R^5$ in view of the appearance of the resulting coating film. The molecular weight of the polyether polyol is preferably in a range from 500 to 50,000, and more preferably from 1,000 to 20,000.

The method of preparing the urethane-type compound represented by the general formula (2) includes, for example, a method of mixing one kind or two or more kinds of polyisocyanates represented by $R^1$-$(NCO)_j$, one kind or two or more kinds of polyether monoalcohols represented by HO-$(R^2$-$O)_k$-$R^3$, and one kind or two or more kinds of polyether polyols represented by $R^4$-$[(O$-$R^5)_m$-$OH]_n$ so that a ratio of a hydroxyl group value and an isocyanate value from the respective compounds is in a range from 1.05/1 to 1.4/1 and reacting the mixture, for example, at 80 to 90°C for 1 to 3 hours in the same manner as in the case of a conventional reaction between a polyether and an isocyanate.

In the case where the aqueous coating composition of the present invention contains the urethane-type compound represented by the general formula (1) or (2), the content is 0.01% by weight as a lower limit and 20% by weight as an upper limit, and preferably 0.1% by weight as a lower limit and 10% by weight as an upper limit, based on the solid content of the coating material. The content less than 0.01% by weight may cause an insufficient improvement in appearance of the resulting coating film. In the case where the aqueous coating composition contains a glitter material as a coloring component described hereinafter, the resulting coating film has insufficiently improved flip-flop properties. The content exceeding 20% by weight may impair various performances of the resulting coating film.

The aqueous coating composition of the present invention may further contain a polyether polyol. The number of a primary hydroxyl group contained in a molecule of such a polyether polyol preferably is 0.02 on average as a lower limit, preferably 0.04 as a lower limit, and more preferably 1 as a lower limit. When the number of the primary hydroxyl group is less than 0.02, various performances of the resulting coating film are impaired. The polyether polyol may have secondary and tertiary hydroxyl groups, in addition to the primary hydroxyl group, and the number of the entire hydroxyl groups including primary, secondary and tertiary hydroxyl groups in a molecule is preferably not less than 2 in view of various performances of the resulting coating film. The hydroxyl group value of the polyether polyol is 30 as a lower limit and 700 as an upper limit, and more preferably 50 as a lower limit and 500 as an upper limit. The hydroxyl group value deviating from the range specified above may impair the storage stability of the coating material and various performances of the resulting coating film.

The number average molecular weight of the polyether polyol is preferably 300 as a lower limit and 3,000 as an upper limit, and more preferably 400 as a lower limit and 2,000 as an upper limit. When the hydroxyl group value deviates from the range specified'above, or less than 300, various performances of the resulting coating film are impaired. The number average molecular weight as used in the present specification may be decided by GPC (Gel

Permeation Chromatography) using polystyrene as a standard.

The water tolerance value of the polyether is preferably 2.0 as a lower limit and preferably 3.0 as a lower limit. The water tolerance value less than 2.0 impairs the stability of the coating material, resulting in poor appearance of the resulting coating film. The water tolerance value is employed to evaluate the degree of hydrophilicity and higher values means higher hydrophilicity. The water tolerance value is measured by the following method. That is, 0.5 g of the polyether polyol is dispersed in 10 ml of acetone with mixing in a 100 ml beaker under the conditions of a temperature of 25°C. Using a burette, deionized water is gradually added to the mixture and an amount (ml) of deionized water required to produce a white turbidity in the mixture is measured. The amount (ml) of deionized water is taken as a water tolerance value.

According to this method, in the case where the polyether polyol is hydrophobic, the polyether polyol and acetone are at first satisfactorily compatible with each other, while they are made to be incompatible with each other as a result of the addition of a small amount of deionized water and thus a white turbidity is produced in the measuring system. On the other hand, in the case where the polyether polyol is hydrophilic, the polyether polyol having higher hydrophilicity requires a larger amount of deionized water until a white turbidity is produced. Therefore, the degree of hydrophilicity/hydrophobicity of the polyether polyol may be measured by this method.

In the case where the aqueous coating composition of the present invention contains the polyether polyol, the content is 1% by weight as a lower limit and 40% by weight as an upper limit, and more preferably 3% by weight as a lower limit and 30% by weight as an upper limit. The content less than 1% by weight may cause impairment of the appearance of the resulting coating film, while the content exceeding 40% by weight may cause impairment of various performances of the resulting coating film.

The polyether polyol may includes, for example, those compound which an alkylene oxide is added to an active hydrogen atom-containing compound. Examples of the active hydrogen atom-containing compound may include polyhydric alcohol, polyhydric phenol and polyhydric carboxylic acids and specific examples thereof may include water; a dihydric alcohol such as 1,6-hexanediol or neopentyl glycol; a tetrahydric alcohol such as diglycerin or sorbitan; a pentahydric alcohol such as adonitol, arabitol, xylitol or triglycerin; a hexahydric alcohol such as dipentaerythritol, sorbitol, mannitol, iditol, inositol, dulcitol, talose or allose; an octahydric alcohol such as sucrose; polyhydric alcohol such as polyglycerin, polyhydric phenol derivertives including polyhydric phenols such as pyrogallol, hydroquinone or phloroglucine and bisphenols such as bisphenol A and bisphenol sulfone; and a polyhydric carboxylic acid such as adipic acid or fumaric acid, and a mixture of two or more kinds of them.

Specific examples of the alkylene oxide may include alkylene oxide such as ethylene oxide, propylene oxide, or butylene oxide, and two or more kinds of them may be used in combination. The form of addition in using two or more kinds of them in combination may be employed both block and random.

Examples of the commercially available polyether polyol may include Prime Pole PX-1000, Sunnix SP-750, PP-400 (any of the above are manufactured by Sanyo Chemical Industries, Ltd.) and PTMG-650 (manufactured by Mitsubishi Chemicals). The polyether polyol may be obtained by adding the alkylene oxide to the active hydrogen-containing compound, normally in the presence of an alkali catalyst, under normal pressure or pressure at a temperature of 60 to 160°C using a conventional method.

Further, to improve pigment dispersibility, the polyether polyol may be modified by using, as a modifying agent, a basic substance such as amino resin which will be mentioned later, hydroxyethyleneimine (for example, "HEA" manufactured by Sogo Pharmaceutical Co., Ltd.) or 2-hydroxypropyl-2-aziridinylethyl carboxylate (for example, "HPAC" manufactured by Sogo Pharmaceutical Co., Ltd.), as disclosed in Japanese Laid-open Patent Publication No. 59-138269. The amount of the modifying agent is preferably in a range from 1 to 10% by weight based on the polyether polyol. When the amount of the modifying agent is less than 1% by weight, sufficient modifying effect can not be obtained, while the amount exceeding 10% by weight may impair the stability of the polyether polyol after modification.

The aqueous coating composition of the present invention may optionally contain film-forming resins. Examples of the film-forming resin include, but are not limited to, acrylic resin, polyester resin, alkyd resin, epoxy resin and urethane resin. Particularly, in the case where the aqueous coating composition of the present invention contains a scaly glitter material, it preferably contains a polyester resin and/or an alkyd resin for the purpose of improving flip-flop properties of the resulting coating film.

In the polyester resin and the alkyd resin, the number average molecular weight is preferably 1,000 as a lower limit and 50,000 as an upper limit, and more preferably 1,500 as a lower limit and 30,000 as an upper limit. The number average molecular weight less than 1,000 may cause insufficient coating workability and curability, while the number average molecular weight exceeding 50,000 may cause too low nonvolatile content upon coating resulting in poor coating workability in turn.

The polyester resin and the alkyd resin preferably have an acid group and the acid value of the resin solid content is preferably 10 as a lower limit and 100 as an upper limit, and more preferably 20 as a lower limit and 80 as an upper limit. The acid value less than 10 may cause impairment of the water dispersibility of the resin, while the acid value exceeding 100 may cause impairment of various performances of the resulting coating film. The polyester resin

and the alkyd resin preferably have a hydroxyl group and the hydroxyl group value is preferably 10 as a lower limit and 180 as an upper limit, and more preferably 20 as a lower limit and 160 as an upper limit. The hydroxyl group value less than 10 may cause impairment of the curability of the resulting coating film, while the hydroxyl group value exceeding 180 may cause impairment various performances of the resulting coating film. The method of preparing the polyester resin and the alkyd resin is not specifically limited and they may be obtained by polycondensing a polyhydric carboxylic acid component, a polyhydric alcohol component and, if necessary, a fat and oil component.

In the case where the polyester resin and/or the alkyd resin are contained, the mixing ratio of the above aqueous resin dispersion to the polyester resin and the alkyd resin is preferably 5/95 as a lower limit and 95/5 as an upper limit, and more preferably 10/90 as a lower limit and 85/15 as an upper limit, based on the weight of the resin solid content. The mixing ratio deviating from the range specified above may cause impairment of suppression of sagging upon coating or of appearance of the coating film. In the case of mixing the polyester resin and/or the alkyd resin, they are preferably mixed after previously dissolving or dispersing in an aqueous medium using a neutralizing base in view of the storage stability.

The aqueous coating composition of the present invention may contain curing agents. The curing agent includes those which are used commonly in the coating material. Specific examples thereof may include amino resin, blocked isocyanate, epoxy compound, aziridine compound, carbodiimide compound, oxazoline compound and metal ion. Among these, an amino resin and/or a blocked isocyanate are preferred in view of various performances of the resulting coating film, and cost.

The amino resin as the curing agent is not specifically limited and a water-soluble melamine resin or a water-insoluble melamine resin may be used. Among these melamine resins, a melamine resin having a water tolerance value of not less than 3.0 is preferably used in view of the stability of the aqueous coating composition. The water tolerance value may be measured by the same method as above described for the polyether polyol.

The blocked isocyanate includes, for example, those obtained by adding a blocking agent having active hydrogen to a polyisocyanate such as trimethylene diisocyanate, hexamethylene diisocyanate, xylylene diisocyanate or isophorone diisocyanate, wherein the blocking agent is dissociated by heating to generate an isocyanate group and to react with a functional group in afore-mentioned resin component resulting in curing.

In the case where the aqueous coating composition of the present invention contains these curing agents, the content is preferably 20 parts by weight as a lower limit and 100 parts by weight as an upper limit based on 100 parts by weight of the resin solid content in the aqueous coating composition in view of the curability.

The aqueous coating composition of the present invention may contain pigments, in addition to the above-mentioned components. Examples of the pigment include organic pigments such as azo chelete-type pigment, insoluble azo-type pigment, condensed azo-type pigment, phthalocyanine-type pigment, indigo pigment, perynone-type pigment, perylene-type pigment, dioxane-type pigment, quinacridone-type pigment, isoindolinone-type pigment and metal complex pigment; inorganic pigments such as chrome yellow, yellow iron oxide, red iron oxide, carbon black and titanium dioxide; and extender pigments such as talc, clay, barium sulfate and calcium carbonate.

The concentration of the pigment in the solid content contained in the aqueous coating composition is preferably 0.1% by weight as a lower limit and 50% by weight as an upper limit, more preferably 0.5% by weight as a lower limit and 40% by weight as an upper limit, and still more preferably 1.0% by weight as a lower limit and 30% by weight as an upper limit.

The aqueous coating composition of the present invention may be mixed with additives which are commonly added to the coating material, in addition to the above components, such as surface conditioners, thickeners, antioxidants, ultraviolet inhibitors and defoamers. The amount of these additives is in a range known to persons skilled in the art. The method of preparing the aqueous coating composition of the present invention is not specifically limited and there may be used any methods known to persons skilled in the art, for example, a method of kneading additives such as pigment using a kneader or roll and dispersing it using a sand grind mill or Disper.

Then, the method for formation of a multilayer coating film of the present invention will be described below.

The method for formation of a multilayer coating film of the present invention is a method for formation of a multilayer coating film, which comprises coating an aqueous base coating material on a material to be coated, on which a electrodeposition film and a intermediate coating film are optionally formed, to form a base coating film, coating a clear coating material on the base coating film to form a clear coating film, and then curing both coating films with heating, wherein the aqueous base coating material is the aforementioned aqueous coating composition.

The material to be coated may be used in various base materials such as metal molded articles, plastic molded articles and foamed materials, and may be preferably used metal molded articles which can be subjected to cationic electrodeposition coating. Examples of the metal molded article include plates and molded articles made of metals such as iron, copper, aluminum, tin and zinc and alloys containing these metals. Specific examples thereof include bodies and parts of automobiles such as passenger cars, trucks, motorcycles and buses. It is preferred that these metals are previously chemical-treated with phosphate or chromate.

An electrodeposition film may be formed on the chemical-treated metal molded article. As such an electrodeposition coating material, cationic and anionic electrodeposition coating materials may be used and a cationic electrodeposition coating material is preferably used in view of the corrosion resistance.

As the plastic molded article, there may be described plates, molded articles and the like made of polypropylene resin, polycarbonate resin, urethane resin, polyester resin, polystyrene resin, ABS resin, vinyl chloride resin and polyamide resin. Specific examples thereof include automobile parts such as spoiler, bumper, mirror cover, grill and doorknob. Furthermore, these plastic molded articles are preferably steam-cleaned with trichloroethane or cleaned with a neutral detergent. Also these plastic molded articles may be coated with a primer for enabling electrostatic coating.

On the base material, an intermediate coating film may be optionally formed. In the formation of the intermediate coating film, an intermediate coating material is used. This intermediate coating material contains a coating film-forming resin, a curing agent, organic and inorganic coloring components and an extender pigment. Examples of the film-forming resin and the curing agent may include, but are not limited to, film-forming resins and curing agents described for the aforementioned aqueous coating composition and these may be used in combination thereof. In view of various performances of the resulting intermediate coating film and cost, an acrylic resin and/or a polyester resin are used in combination with an amino resin and/or an isocyanate.

The coloring component contained in the intermediate coating material includes, for example, those described for' the aforementioned aqueous coating composition. In general, it is preferred to use a gray intermediate coating material composed mainly of carbon black and titanium dioxide, a set gray intermediate coating material matched with the hue of the top coat, or a so-called color intermediate coating material combined with various color pigments. Furthermore, flat pigments such as aluminum powder and mica powder may also be added. The intermediate coating material may be mixed with additives which are commonly added to the coating material, in addition to the above components, such as surface conditioners, antioxidants and defoamers.

The clear coating material used in the method for formation of a multilayer coating film of the present invention is not specifically limited and a clear coating material containing a coating film-forming resin and a curing agent may be utilized. Furthermore, the clear coating material may contain a coloring component as far as it does not impair design properties of the base coat. The form of the clear coating material includes the solvent-borne type, aqueous type and powder type.

Preferred examples of the solvent-borne clear coating material include combinations of an acrylic resin and/or a polyester resin, and an amino resin and/or an isocyanate; or, an acrylic resin and/or a polyester resin having a carboxylic acid-epoxy curing system; or the like, in view of the transparency or resistance to acid etching.

The aqueous clear coating material include, for example, those containing a resin obtained from film-forming resins, which are included among those mentioned above as examples of the solvent-borne clear coating material, by neutralization with a base for rendering it aqueous. This neutralization may be conducted, before or after the polymerization, by adding a tertiary amine such as dimethylethanolamine or triethylamine.

On the other hand, the power type clear coating material may be obtained by using an ordinary powder coating material such as thermoplastic or thermosetting powder coating material. For obtaining coating films with good physical properties, a thermosetting powder coating material is preferred. Specific examples of the thermosetting powder coating material include epoxy-type, acrylic and polyester-type powder clear coating materials. An acrylic powder clear coating material is particularly preferred because of its good weathering resistance.

Further, in the above clear coating material, rheological controlling agents for securing the coating workability are preferably added. As the rheological controlling agent, there may be used those which are well known to those skilled in the art and exhibit thixotropy.

In the method for formation of a multilayer coating film of the present invention, a base coating film, which is formed by coating the above-mentioned aqueous coating composition used as the aqueous base coating material on a material to be coated, imparts beautiful appearance and design properties to the material to be coated.

The method of coating the aqueous base coating material to bodies of automobiles include, for example, a method comprising multistage, preferably two-stage, coating by air-electrostatic spray coating, or a method using a combination of air-electrostatic spray coating and a rotary spraying type electrostatic coating machine referred to as metallic bell.

In the method for formation of a multilayer coating film of the present invention, the thickness of the coating film of the aqueous base coating material on coating varies according to the intended use. In many cases, however, the dry film thickness is preferably in a range from 10 to 30 μm. When the dry film thickness is less than 10 μm, the substrate cannot be shielded to cause film breaking. On the other hand, when the dry film thickness exceeds 30 μm, the image sharpness may deteriorate or problems such as mottling and sagging may occur upon coating.

According to the method for formation of a multilayer coating film of the present invention, after baking a base coating film obtained by coating the aqueous base coating material, a clear coating material may be coated thereon. However, the process of baking and drying the base coating film may be omitted by further coating a clear coating material on the uncured base coating film to form a clear coating film and, therefore, this process is preferred from the

economy and environmental points of view. For obtaining well finished coating film, it is desirable that the uncured base coating film is preheated at 40 to 100°C for 2 to 10 minutes before coating the clear coating material.

In the method for formation of a multilayer coating film of the present invention, the clear coating film to be coated after forming the base coating film smoothen the mottling due to the base coating film to improve glossiness, protects the base coating film and further imparts beautiful appearance. Specific examples of the method of coating the above mentioned clear coating material on the base coating material include a method of coating using a rotary spraying type electrostatic coating machine such as micromicro bell or micro bell.

The dry film thickness of the clear coating film formed by coating the clear coating material is preferably in a range from about 10 to 80 μm, and more preferably from about 20 to 60 μm. When the dry film thickness is less than 10 μm, the mottling of the substrate cannot be shielded. On the other hand, when the dry film thickness is exceeds 80 μm, problems such as pinholes and sagging may occur upon coating.

The coating film thus formed is preferably formed by a so-called two-coat-one-bake technique comprising curing together with the uncured base coating film, as described above. The baking temperature is preferably set in a range from 80 to 180°C, and more preferably from 120 to 160°C, in view of the cross-link density and physical properties of the resulting multilayer coating film. The baking time may be optionally set according to the baking temperature, but is preferably in a range from 10 to 30 minutes at the baking temperature of 120 to 160°C.

The thickness of the multilayer coating film formed by the method for formation of a multilayer coating film of the present invention is generally in a range from 30 to 300 μm, and preferably from 50 to 250 μm. The thickness less than 30 μm may cause a reduction in strength of the film itself, while the thickness exceeding 300 μm may impair physical properties of the film such as cool-and-heat cycle.

EXAMPLES

Hereinafter, the present invention will be described in the following Examples, which is not limited thereto. In the following description, terms "parts" and "%" are based on weight unless otherwise indicated.

Aqueous solution resins for emulsion polymerization were produced by the first method in Examples 1 to 13.

[Production Example 1: Production of aqueous resin dispersion 1]

In a reaction vessel, 0.5 parts of AMBN (2,2'-azobis(2-methylbutyronitrile)) as a polymerization initiator and 100 parts of IPA (isopropyl alcohol) were charged and heated to 80°C while stirring. And then, while stirring, a monomer mixed solution A (acid value: 52, hydroxyl group value: 69) composed of 55 parts of methyl methacrylate, 40 parts of n-butyl acrylate, 20 parts of 2-hydroxyethyl methacrylate and 10 parts of methacrylic acid was added dropwise over 5 hours.

After the completion of the dropwise addition, a solution prepared by dissolving 0.3 parts of AMBN in 15 parts of IPA was added in the reaction vessel and the reaction was further continued at 80°C for 2 hours. After the completion of the polymerization, 5 parts of 25% aqueous ammonia was added in the reaction vessel while stirring and 350 parts of water was added dropwise in the reaction vessel over about 2 hours, thereby to convert into an aqueous solution. After converting into the aqueous solution, IPA was evaporated using a rotary evaporator to obtain an aqueous solution resin for emulsion polymerization.

Then, in the reaction vessel, 225 parts of the aqueous solution resin for emulsion polymerization, 560 parts of water and 1 part of New Coal 707SF (manufactured by Nippon Nyukazai Co., Ltd.) were charged and, after the mixture was heated with stirring and reached 75°C, a solution prepared by dissolving 5% by weight of a monomer mixed solution B (acid value: 3, hydroxyl group value: 41) composed of 90 parts of methyl methacrylate, 100 parts of n-butyl acrylate, 20 parts of 2-hydroxyethyl methacrylate and 1 part of methacrylic acid; and 0.5 parts of ammonium persulfate in 5 parts of water was charged and stirred for 20 minutes. 95% by weight of the remaining monomer mixed solutiow B for core resin was added dropwise at 80°C over 2 hours and, after the completion of the dropwise addition, the mixture was maintained at 80 to 85°C for 1 hour and then cooled.

After cooling, a mixed solution of 1 part of dimethylaminoethanol and 10 parts of water was charged to obtain an aqueous resin dispersion 1 having a nonvolatile content of 30% by weight.

[Production Example 2: Production of water-soluble acrylic resin]

In a reaction vessel, 23.9 parts of dipropylene glycol monomethyl ether and 16.1 parts of propylene glycol methyl ether were charged and heated to 120°C while mixing with stirring in a nitrogen flow. Then, a mixed solution of 54.5 parts of ethyl acrylate, 12.5 parts of methyl methacrylate, 14.7 parts of 2-hydroxyethyl acrylate, 10.0 parts of styrene and 8.5 parts of methacrylic acid; and an initiator solution composed of 10.0 parts of dipropylene glycol monomethyl ether and 2.0 parts of t-butylperoxy-2-ethyl hexanoate were simultaneously added dropwise in the reaction

vessel over 3 hours. After the completion of the dropwise addition, the mixture was aged at the same temperature for 0.5 hours.

Furthermore, an initiator solution composed of 5.0 parts of dipropylene glycol monomethyl ether and 0.3 parts of t-butylperoxy-2-ethyl hexanoate was added dropwise in the reaction vessel over 0.5 hours. After the completion of the dropwise addition, the mixture was aged at the same temperature for 1 hour.

After 16.1 parts of the solvent was distilled off under reduced pressure (70 Torr) at 110°C using a solvent removing apparatus, 187.2 parts of deionized water and 8.8 parts of dimethylaminoethanol were added to obtain a water-soluble acrylic resin having a nonvolatile content of 31%, a weight average molecular weight of 27,000, a number average molecular weight of 9,000, a solid content acid value of 56 and a hydroxyl group value of 70.

[Production Example 3: Production of phosphate group-containing acrylic resin]

In a reaction vessel, 23 parts of methoxypropanol was added and heated to 120°C while mixing with stirring in a nitrogen flow. Then, 22 parts of a solution which is prepared by dissolving 15 parts of Phosmer PP (acid phosphoxyhexa(oxypropylene) monomethacrylate, manufactured by Uni Chemical Co., Ltd.) in 7 parts of methoxypropnaol; mixed solution composed of 12.3 parts of 2-ethylhexyl acrylate, 7.0 parts of 2-hydroxyethyl methacrylate, 7.5 parts of lauryl methacrylate, 4.4 parts of styrene and 3.8 parts of methacrylic acid; and an initiator solution composed of 4.5 parts of methoxypropanol and 0.9 parts of azobisisobutyronitrile were simultaneously added dropwise in the reaction vessel over 3 hours. After the completion of the dropwise addition, the mixture was aged at the same temperature for 0.5 hours.

Furthermore, an initiator solution composed of 0.5 parts of methoxypropanol and 0.5 parts of azobisisobutyronitrile was added dropwise in the reaction vessel over 0.5 hours. After the completion of the dropwise addition, the mixture was aged at the same temperature for 1.5 hours and then 13.7 parts of methoxypropanol was added to obtain a phosphate group-containing acrylic resin having a nonvolatile content of 50%, a solid content acid value of 61, a hydroxyl group value of 60 and a number average molecular weight of 5,000.

[Production Example 4: Preparation of glitter material paste]

21 Parts of Alupaste MH8801 (aluminum pigment paste, manufactured by Asahi Kasei Corporation) was dissolved in 40 parts of 2-ethylhexanol, and then, 10 parts of Prime Pole PX-1000 (difunctional polyether polyol, manufactured by Sanyo Chemical Industries, Ltd.), 5 parts of the phosphate group-containing acrylic resin obtained in Production Example 3, and 0.3 parts of lauryl acid phosphate were gradually added with stirring by desktop Disper to obtain a glitter material paste containing aluminum.

[Example 1]

200.0 Parts of the aqueous resin dispersion 1 obtained in Production Example 1, 32.3 parts of the water-soluble acrylic resin obtained in Production Example 2, 66.3 parts of the glitter material paste obtained in Production Example 4, 25.3 parts of Cymel 204, 1.7 parts of Adekanol UH-814N (urethane-type compound, manufactured by ASAHI DENKA KOGYO CO., LTD., active component: 30% by weight) and 40 parts of 2-ethylhexanol were mixed with stirring and the pH was controlled to 8 by adding an aqueous 10% by weight dimethylaminoethanol solution to obtain a uniformly dispersed aqueous coating composition 1. This coating material was diluted with deionized water to 45 seconds (measured at 20°C using No. 4 Ford cup).

Power-Top U-50 (a cationic electrodeposition coating material, manufactured by Nippon Paint Co., Ltd.) was electrodeposited on a zinc phosphate-treated dull steel panel in size of 300 x 400 x 0.8 mm in a dry film thickness of 20 μm, and baked at 160°C for 30 minutes. On the electrodeposited film of the resulting coated plate, Orga P-2 (a melamine curing polyester resin-type gray intermediate coating material, manufactured by Nippon Paint Co., Ltd.) diluted beforehand to 25 seconds (measured at 20°C using No. 4 Ford cup) is coated by an air sprayer in a dry film thickness of 35 μm. Then, the coating film was baked at 140°C for 30 minutes and then cooled to obtain an intermediately coated substrate.

On the intermediately coated substrate, the aqueous coating composition 1 was coated in two stages in a dry film thickness of 15 μm under the conditions of a temperature of 25°C and a humidity of 85% by Model COPES-IV (a rotary spraying type electrostatic coating machine for aqueous coating material, manufactured by ABB Industries). Between the two coating processes, there was a 1.5-minute interval for setting. The second coating process was followed by a 5-minute interval for setting. Thereafter, preheating was carried out at 80°C for 3 minutes to obtain a base coating film.

After preheating, the coated plate was air-cooled to room temperature and, on the base coating film, Orga TO-563 Clear (a melamine curing acrylic resin-type clear coating material, manufactured by Nippon Paint Co., Ltd.)

as a clear coating material was coated in one stage in a dry film thickness of 40 μm by micromicro bell (a rotary spraying type electrostatic coating machine, manufactured by ABB Industries), followed by setting for 7 minutes. Furthermore, the resulting coated plate was baked in a hot-air oven at 140°C for 30 minutes to obtain a multilayer coated film on the substrate.

[Production Examples 5 to 9: Production of aqueous resin dispersions 2 to 6]

In the same manner as in Production Example 1, except that the formulations of the polymerizable unsaturated monomer mixed solution A and the polymerizable unsaturated monomer mixed solution B were replaced by formulations shown in Table 1, aqueous resin dispersions 2 to 6 were obtained. The acid value and hydroxyl group value of the respective monomer mixed solutions are shown in Table 1.

[Examples 2 to 6]

In the same manner as in Example 1, except that aqueous resin dispersions 2 to 6 were used in place of the aqueous resin dispersion 1, aqueous coating compositions 2 to 6 were obtained. In the same manner as in Example 1, the aqueous coating compositions were diluted. Further, in the same manner as in Example 1, multilayer coating films were obtained.

[Production Example 10: Production of aqueous resin dispersion 7]

In a reaction vessel in which 130.0 parts of deionized water was charged, 0.2 parts of Adekareasoap NE-20 (α-{1-[allyloxy]methyl}-2-(nonylphenoxy)ethyl)-ω-hydroxyoxyethylene, manufactured by ASAHI DENKA KOGYO CO., LTD., aqueous solution having a solid content of 80% by weight) and 0.2 parts of Aquaron HS-10 (a polyoxyethylene alkyl propenyl phenyl ether sulfate, manufactured by DAI-ICHI KOGYO SEIYAKU CO., LTD.) were added and then heated to 80°C while mixing with stirring in a nitrogen flow. Then, a monomer mixed solution for first stage (acid value: 3, hydroxyl group value: 41) composed of 90.0 parts of methyl methacrylate, 100.0 parts.of n-butyl acrylate, 20.0 parts of 2-hydroxyethyl methacrylate, 1.0 parts of methacrylic acid, 0.3 parts of Adekareasoap NE-20, 0.2 parts of Aquaron HS-10, and 70 parts of deionized water; and an initiator solution composed of 0.2 parts of ammonium persulfate and 7 parts of deionized water were simultaneously added dropwise in the reaction vessel over 2 hours. After the completion of the dropwise addition, the mixture was aged at the same temperature for 1 hour.

Furthermore, a monomer mixed solution for second stage (acid value: 52, hydroxyl group value: 69) composed of 55.0 parts of methyl methacrylate, 40.0 parts of n-butyl acrylate, 20.0 parts of 2-hydroxyethyl methacrylate, 10.0 parts of methacrylic acid, 0.3 parts of Aquaron HS-10, and 30 parts of deionized water; and an initiator solution composed of 0.1 parts of ammonium persulfate and 3 parts of deionized water were simultaneously added dropwise in the reaction vessel over 0.5 hours. After the completion of the dropwise addition, the mixture was aged at the same temperature for 2 hours.

After cooling to 40°C, the mixture was filtered through a 400 mesh filter. Furthermore, the pH was controlled to 7 by adding an aqueous 10% by weight dimethylaminoethanol solution to obtain an aqueous resin dispersion 7 having a nonvolatile content of 30%.

[Production Examples 11 to 15: Production of aqueous resin dispersions 8 to 12]

In the same manner as in Production Example 10, except that the formulations of the monomer mixed solutions for first and second stages were replaced by formulations shown in Table 2, aqueous resin dispersions 8 to 12 were obtained. The acid value and hydroxyl group value of the respective monomer mixed solutions are shown in Table 2.

[Comparative Examples 1 to 6]

In the same manner as in Example 1, except that aqueous resin dispersions 7 to 12 were used in place of the aqueous resin dispersion 1, aqueous coating compositions 7 to 12 were obtained. In the same manner as in Example 1, the aqueous coating compositions were diluted to obtain multilayer coating films.

(Evaluation test)

With respect to the multilayer coating films obtained in Examples 1 to 6 and Comparative Examples 1 to 6, the IV value was measured using an IV meter (manufactured by KANSAI PAINT CO., LTD.) and flip-flop properties of the coating films were evaluated. The coating films having the IV value of not less than 220 were rated "Pass". The

appearance of the respective multilayer coating films was evaluated by visual inspection. As a result, all multilayer coating films exhibited good appearance.

Table 1

| | | Examples | 1 | 2 | 3 | 4 | 5 | 6 |
|---|---|---|---|---|---|---|---|---|
| | Aqueous resin dispersion No. | | 1 | 2 | 3 | 4 | 5 | 6 |
| Aqueous resin dispersion | Monomer mixed solution A | MMA | 55 | 45 | 30 | 30 | 55 | 60 |
| | | ST | - | 12 | 12 | - | - | - |
| | | nBA | 40 | 40 | - | - | 34 | 40 |
| | | EA | - | - | 58 | 75 | - | - |
| | | MAA | 10 | - | 10 | 10 | - | 10 |
| | | AA | - | 8 | - | - | 16 | - |
| | | 2HEMA | 20 | 20 | - | - | 20 | - |
| | | 2HEA | - | - | 15 | 10 | - | 15 |
| | | Acid value | 52 | 50 | 52 | 52 | 100 | 52 |
| | | Hydroxyl group value | 69 | 69 | 58 | 39 | 69 | 58 |
| | Monomer mixed solution B | MMA | 90 | 66 | 30 | 50 | 89 | 40 |
| | | ST | - | 20 | 20 | - | - | - |
| | | nBA | 100 | 100 | - | - | 100 | - |
| | | EA | - | - | 140 | 135 | - | 139 |
| | | MAA | 1 | - | - | 5 | - | 1 |
| | | AA | - | 5 | - | - | 2 | - |
| | | 2HEMA | 20 | 20 | - | - | 20 | - |
| | | 2HEA | - | - | 21 | 21 | - | 21 |
| | | FA-3 | - | - | - | - | - | 10 |
| | | Acid value | 3 | 18 | 0 | 15 | 7 | 3 |
| | | Hydroxyl group value | 41 | 41 | 48 | 48 | 41 | 59 |
| Evaluation of coating film | Flip-flop properties (IV value) | | 233 | 225 | 231 | 228 | 241 | 230 |

MMA: methyl methacrylate, ST: styrene, nBA: n-butyl acrylate,
EA: ethyl acrylate, MAA: methacrylic acid, AA: acrylic acid,
2HEMA: 2-hydroxyethyl metacrylate, 2HEA: 2-hydroxyethyl acrylate
FA-3: PLACCEL FA-3 (long-chain hydroxyl group-containing monomer, manufactured by DAICEL CHEMICAL INDUSTRIES, LTD.)

Table 2

| | | | 1 | 2 | 3 | 4 | 5 | 6 |
|---|---|---|---|---|---|---|---|---|
| | Comparative Eamples | | 1 | 2 | 3 | 4 | 5 | 6 |
| | Aqueous resin dispersion No. | | 7 | 8 | 9 | 10 | 11 | 12 |
| Aqueous resin dispersion | Monomer mixed solution for first stage | MMA | 90 | 66 | 30 | 50 | 89 | 40 |
| | | ST | - | 20 | 20 | - | - | - |
| | | nBA | 100 | 100 | - | - | 100 | - |
| | | EA | - | - | 140 | 135 | - | 139 |
| | | MAA | 1 | - | - | 5 | - | 1 |
| | | AA | - | 5 | - | - | 2 | - |
| | | 2HEMA | 20 | 20 | - | - | 20 | - |
| | | 2HEA | - | - | 21 | 21 | - | 21 |
| | | FA-3 | - | - | - | - | - | 10 |
| | | Acid value | 3 | 18 | 0 | 15 | 7 | 3 |
| | | Hydroxyl group value | 41 | 41 | 48 | 48 | 41 | 59 |
| | Monomer mixed solution for second stage | MMA | 55 | 45 | 30 | 30 | 55 | 60 |
| | | ST | - | 12 | 12 | - | - | - |
| | | nBA | 40 | 40 | - | - | 34 | 40 |
| | | EA | - | - | 58 | 75 | - | - |
| | | MAA | 10 | - | 10 | 10 | - | 10 |
| | | AA | - | 8 | - | - | 16 | - |
| | | 2HEMA | 20 | 20 | - | - | 20 | - |
| | | 2HEA | - | - | 15 | 10 | - | 15 |
| | | Acid value | 52 | 50 | 52 | 52 | 100 | 52 |
| | | Hydroxyl group value | 69 | 69 | 58 | 39 | 69 | 58 |
| Evaluation of coating film | Flip-flop properties (IV value) | | 204 | 200 | 202 | 201 | 210 | 206 |

MMA: methyl methacrylate, ST: styrene, nBA: n-butyl acrylate,
EA: ethyl acrylate, MAA: methacrylic acid, AA: acrylic acid,
2HEMA: 2-hydroxyethyl metacrylate, 2HEA: 2-hydroxyethyl acrylate
FA-3: PLACCEL FA-3 (long-chain hydroxyl group-containing monomer, manufactured by DAICEL CHEMICAL INDUSTRIES, LTD.)

As is apparent from the results shown in Table 1 and Table 2, since all aqueous coating compositions of Examples 1 to 6 contain an aqueous resin dispersion synthesized through predetermined processes, the resulting coating films exhibit good visual appearance and remarkably high flip-flop properties. But it was also been found that the resulting coating films exhibit poor flip-flop properties when using an aqueous resin dispersion obtained by a conventional emulsion polymerization method.

[Production Example 16: Production of aqueous resin dispersion 13]

In a reaction vessel, 0.5 parts of AMBN (2,2'-azobis(2-methylbutyronitrile)) as a polymerization initiator and 100 parts of IPA (isopropyl alcohol) were charged and heated to 80°C while stirring. And then, while stirring, a monomer mixed solution A (acid value: 52, hydroxyl group value: 69) composed of 55 parts of methyl methacrylate, 40 parts of n-butyl acrylate, 20 parts of 2-hydroxyethyl methacrylate and 10 parts of methacrylic acid was added dropwise over 5 hours.

After the completion of the dropwise addition, a solution prepared by dissolving 0.3 parts of AMBN in 15 parts

of IPA was added in the reaction vessel and the reaction was further contented at 80°C for 2 hours. After the completion of the polymerization, 5 parts of 25% aqueous ammonia was added in the reaction vessel while stirring and 350 parts of water was added dropwise in the reaction vessel over about 2 hours, thereby to convert into an aqueous solution. After converting into the aqueous solution, IPA was evaporated using a rotary evaporator to obtain an aqueous solution resin for emulsion polymerization.

Then, in the reaction vessel, 225 parts of the aqueous solution resin for emulsion polymerization, 560 parts of water and 1 part of New Coal 707SF (manufactured by Nippon Nyukazai Co., Ltd.) were charged and, after the mixture was heated with stirring and reached 75°C, a solution prepared by dissolving 5% by weight of a monomer mixed solution B (acid value: 3, hydroxyl group value: 41) composed of 87 parts of methyl methacrylate, 97 parts of n-butyl acrylate, 6 parts of diacetoneacrylamide, 20 parts of 2-hydroxyethyl methacrylate and 1 part of methacrylic acid; and 0.5 parts of ammonium persulfate in 5 parts of water was charged and stirred for 20 minutes. 95% by weight of the remaining monomer mixed solution B for core resin was added dropwise at 80°C over 2 hours and, after the completion of the dropwise addition, the mixture was maintained at 80 to 85°C for 1 hour and then cooled.

After cooling, a mixed solution of 1 part of dimethylaminoethanol and 10 parts of water was charged and further 3 parts of dihydrazide adipate was added to obtain an aqueous resin dispersion 13 having a nonvolatile content of 30% by weight.

[Production Example 17: Production of aqueous resin dispersion 14]

In the same manner as in Production Example 16, except that the formulation of the polymerizable unsaturated monomer mixed solution B was replaced by the formulation shown in Table 3 and the amount of dihydrazide adipate was replaced by 5 parts, an aqueous resin dispersion 14 was obtained. The acid value and hydroxyl group value of the monomer mixed solution B are shown in Table 3.

[Production Examples 18 to 22: Production of aqueous resin dispersions 15 to 19]

In the same manner as in Production Example 16, except that the formulations of the polymerizable unsaturated monomer mixed solutions B was replaced by the formulation shown in Table 3 and dihydrazide adipate was not charged, aqueous resin dispersions 15 to 19 were obtained. The acid value and hydroxyl group value of the respective monomer mixed solutions B are shown in Table 3.

[Examples 7 to 13]

In the same manner as in Example 1, except that aqueous resin dispersions 13 to 19 were used in place of the aqueous resin dispersion 1, aqueous coating compositions 13 to 19 were obtained. In the same manner as in Example 1, the aqueous coating compositions were diluted. Further, in the same manner as in Example 1, multilayer coating films were obtained.

With respect to the multilayer coating films obtained in Examples 7 to 13, the IV value was measured using an IV meter (manufactured by KANSAI PAINT CO., LTD.) and flip-flop properties of the coating films were evaluated. The coating films having the IV value of not less than 220 were rated "Pass". The appearance of the respective multilayer coating films was evaluated by visual inspection. As a result, all multilayer coating films exhibited good appearance.

The abbreviations in Table 3 are as shown below. Other abbreviations are the same as that in Tables 1 and 2.
DAAAm: Diacetone acrylamide
KBM-502: Alkoxysilyl group-containing monomer manufactured by Shin-Etsu Chemical Co., Ltd.
KBM-503: Alkoxysilyl group-containing monomer manufactured by Shin-Etsu Chemical Co., Ltd.
N-MAM: N-Methylol acrylamide
GMA: Glycidyl methacrylate

As is apparent from the results shown in Table 3, since all aqueous coating compositions of Examples 7 to 13 contain an aqueous resin dispersion synthesized through predetermined processes, the resulting coating films exhibit good visual appearance and remarkably high flip-flop properties. Particularly, the coating films of Examples 7 to 11 using diacetoneacrylamide or a hydrolyzable silyl group-containing monomer as a cross-linkable monomer exhibited remarkably good appearance.

Table 3

| | | Examples | 7 | 8 | 9 | 10 | 11 | 12 | 13 |
|---|---|---|---|---|---|---|---|---|---|
| | Aqueous resin dispersion No. | | 13 | 14 | 15 | 16 | 17 | 18 | 19 |
| Aqueous resin dispersion | Monomer mixed solution A | MMA | 55 | 55 | 55 | 55 | 55 | 55 | 55 |
| | | ST | - | - | - | - | - | - | - |
| | | nBA | 40 | 40 | 40 | 40 | 40 | 40 | 40 |
| | | EA | - | - | - | - | - | - | - |
| | | MAA | 10 | 10 | 10 | 10 | 10 | 10 | 10 |
| | | AA | - | - | - | - | - | - | - |
| | | 2HEMA | 20 | 20 | 20 | 20 | 20 | 20 | 20 |
| | | 2HEA | - | - | - | - | - | - | - |
| | | Acid value | 52 | 52 | 52 | 52 | 52 | 52 | 52 |
| | | Hydroxyl group value | 69 | 69 | 69 | 69 | 69 | 69 | 69 |
| | Monomer mixed solution B | MMA | 87 | 61 | 30 | 86 | 40 | 87 | 61 |
| | | ST | - | 20 | 20 | - | - | - | 20 |
| | | nBA | 97 | 95 | - | 100 | - | 97 | 95 |
| | | EA | - | - | 140 | - | 140 | - | - |
| | | MAA | 1 | - | - | - | 1 | 1 | - |
| | | AA | - | 5 | - | 4 | - | - | 5 |
| | | 2HEMA | 20 | 20 | - | - | - | 20 | 20 |
| | | 2HEA | - | - | 15 | 15 | 17 | - | - |
| | | FA-3 | - | - | - | - | 10 | - | - |
| | | DAAAm | 6 | 10 | - | - | - | - | - |
| | | KBM-502 | - | - | 6 | - | - | - | - |
| | | KBM-503 | - | - | - | 6 | 3 | - | - |
| | | N-MAM | - | - | - | - | - | 6 | - |
| | | GMA | - | - - | - | - | - | - | 10 |
| | | Acid value | 3 | 18 | 0 | 14 | 3 | 3 | 18 |
| | | Hydroxyl group value | 41 | 41 | 34 | 34 | 39 | 41 | 41 |
| Evaluation of coating film | Flip-flop properties (IV value) | | 257 | 264 | 250 | 255 | 251 | 253 | 245 |

In Examples 14 to 26, Aqueous solution resins for emulsion polymerization were produced by the second method.

[Production Example 23: Production of aqueous resin dispersion 20]

In a reaction vessel, 350 parts of water was charged and then heated to 75°C. While stirring, 0.5 parts of APS (ammonium persulfate) as a polymerization initiator was charged and a monomer mixed solution A (acid value: 63, hydroxyl group value: 58) composed of 35.0 parts of methyl methacrylate, 65.0 parts of ethyl acrylate, 15.0 parts of 2-hydroxyethyl acrylate and 10.0 parts of acrylic acid was added dropwise over 5 hours. While adding dropwise the monomer, a solution prepared by dissolving 0.3 parts of APS in 5 parts of water was simultaneously added dropwise.

After the completion of the dropwise addition, the reaction was further continued at 80°C for 2 hours to obtain an aqueous solution resin for emulsion polymerization.

Then, in the reaction vessel, 360 parts of the aqueous solution resin for emulsion polymerization, 400 parts of water and 1 part of New Coal 293 (manufactured by Nippon Nyukazai Co., Ltd.) were charged and, after the mixture was heated with stirring and reached 75°C, a solution prepared by dissolving 5% by weight of a monomer mixed solution B (acid value: 4, hydroxyl group value: 34) composed of 115.0 parts of methyl methacrylate, 80.0 parts of n-butyl acrylate, 15.0 parts of 2-hydroxyethyl acrylate and 1.0 parts of acrylic acid; and 0.5 parts of ammonium persulfate, in 5 parts of water was charged and stirred for 20 minutes. 95% by weight of the remaining monomer mixed solution B was added dropwise at 80°C over 2 hours and, after the completion of the dropwise addition, the mixture was maintained at 80 to 85°C for 1 hour and then cooled.

After cooling, a mixed solution of 3 parts of dimethylaminoethanol and 30 parts of water was charged to obtain an aqueous resin dispersion 20 having a nonvolatile content of 30% by weight.

In the same manner as in Production Example 2, a water-soluble acrylic resin was produced.

In the same manner as in Production Example 3, a phosphate group-containing acrylic resin was produced.

In the same manner as in Production Example 4, a glitter material paste was prepared.

[Example 14]

200.0 Parts of the aqueous resin dispersion 20 obtained in Production Example 23, 32.3 parts of the water-soluble acrylic resin obtained in Production Example 2, 66.3 parts of the glitter material paste obtained in Production Example 4, 25.3 parts of Cymel 204, 1.7 parts of Adekanol UH-814N (urethane-type compound, manufactured by ASAHI DENKA KOGYO CO., LTD., active component: 30% by weight) and 40 parts of 2-ethylhexanol were mixed with stirring and the pH was controlled to 8 by adding an aqueous 10% by weight dimethylaminoethanol solution to obtain a uniformly dispersed aqueous coating composition 20. This coating material was diluted with deionized water to 45 seconds (measured at 20°C using No. 4 Ford cup).

Power-Top U-50 (a cationic electrodeposition coating material, manufactured by Nippon Paint Co., Ltd.) was electrodeposited on a zinc phosphate-treated dull steel panel in size of 300 x 400 x 0.8 mm in a dry film thickness of 20 μm, and baked at 160°C for 30 minutes. On the electrodeposited film of the resulting coated plate, Orga P-2 (a melamine curing polyester resin-type gray intermediate coating material, manufactured by Nippon Paint Co., Ltd.) diluted beforehand to 25 seconds (measured at 20°C using No. 4 Ford cup) is coated by an air sprayer in a dry film thickness of 35 μm. Then, the coating film was baked at 140°C for 30 minutes and then cooled to obtain an intermediately coated substrate.

On the intermediately coated substrate, the aqueous coating composition 20 was coated in two stages in a dry film thickness of 15 μm under the conditions of a temperature of 25°C and a humidity of 85% by Model COPES-IV (a rotary spraying type electrostatic coating machine for aqueous coating material, manufactured by ABB Industries). Between the two coating processes, there was a 1.5-minute interval for setting. The second coating process was followed by a 5-minute interval for setting. Thereafter, preheating was carried out at 80°C for 3 minutes to obtain a base coating film.

After preheating, the coated plate was air-cooled to room temperature and, on the base coating film, Orga-TO-563 Clear (a melamine curing acrylic resin-type clear coating material, manufactured by Nippon Paint Co., Ltd.) as a clear coating material was coated in one stage in a dry film thickness of 40 μm by micromicro bell (a rotary spraying type electrostatic coating machine, manufactured by ABB Industries), followed by setting for 7 minutes. Furthermore, the resulting coated plate was baked in a hot-air oven at 140°C for 30 minutes to obtain a multilayer coated film on the substrate.

[Production Examples 24 to 28: Production of aqueous resin dispersions 21 to 25]

In the same manner as in Production Example 23, except that the formulations of the polymerizable unsaturated monomer mixed solution A and the polymerizable unsaturated monomer mixed solution B were replaced by formulations shown in Table 4, aqueous resin dispersions 21 to 25 were obtained. The acid value and hydroxyl group value of the respective monomer mixed solutions are shown in Table 4.

[Examples 15 to 19]

In the same manner as in Example 14, except that aqueous resin dispersions 21 to 25 were used in place of the aqueous resin dispersion 20, aqueous coating compositions 21 to 25 were obtained. In the same manner as in Example 14, the aqueous coating compositions were diluted. Further, in the same manner as in Example 14, multilayer coating films were obtained.

[Production Example 29: Production of aqueous resin dispersion 26]

In a reaction vessel in which 130.0 parts of deionized water was charged, 0.2 parts of Adekareasoap NE-20 (α-{1-[allyloxy]methyl}-2-(nonylphenoxy)ethyl)-ω-hydroxyoxyethylene, manufactured by ASAHI DENKA KOGYO CO., LTD., aqueous solution having a solid content of 80% by weight) and 0.2 parts of Aquaron HS-10 (a polyoxyethylene alkyl propenyl phenyl ether sulfate, manufactured by DAI-ICHI KOGYO SEIYAKU CO., LTD.) were added and then heated to 80°C while mixing with stirring in a nitrogen flow. Then, a monomer mixed solution for first stage (acid value: 4, hydroxyl group value: 34) composed of 115.0 parts of methyl methacrylate, 80.0 parts of n-butyl acrylate, 15.0 parts of 2-hydroxyethyl methacrylate, 1.0 parts of acrylic acid, 0.3 parts of Adekareasoap NE-20, 0.2 parts of Aquaron HS-10, and 70 parts of deionized water; and an initiator solution composed of 0.2 parts of ammonium persulfate and 7 parts of deionized water were simultaneously added dropwise in the reaction vessel over 2 hours. After the completion of the dropwise addition, the mixture was aged at the same temperature for 1 hour.

Furthermore, a monomer mixed solution for second stage (acid value: 63, hydroxyl group value: 58) composed of 35.0 parts of methyl methacrylate, 65.0 parts of ethyl acrylate, 15.0 parts of 2-hydroxyethyl acrylate, 10.0 parts of acrylic acid, 0.3 parts of Aquaron HS-10, and 30 parts of deionized water; and an initiator solution composed of 0.1 parts of ammonium persulfate and 3 parts of deionized water were simultaneously added dropwise in the reaction vessel over 0.5 hours. After the completion of the dropwise addition, the mixture was aged at the same temperature for 2 hours.

After cooling to 40°C, the mixture was filtered through a 400 mesh filter. Furthermore, the pH was controlled to 7 by adding an aqueous 10% by weight dimethylaminoethanol solution to obtain an aqueous resin dispersion 26 having a nonvolatile content of 30%.

[Production Examples 30 to 34: Production of aqueous resin dispersions 27 to 31]

In the same manner as in Production Example 29, except that the formulations of the monomer mixed solutions for first and second stages were replaced by formulations shown in Table 5, aqueous resin dispersions 27 to 31 were obtained. The acid value and hydroxyl group value of the respective monomer mixed solutions are shown in Table 5.

[Comparative Examples 7 to 12]

In the same manner as in Example 14, except that aqueous resin dispersions 26 to 31 were used in place of the aqueous resin dispersion 20, aqueous coating compositions 26 to 31 were obtained. In the same manner as in Example 14, the aqueous coating compositions were diluted to obtain multilayer coating films.

(Evaluation test)

With respect to the multilayer coating films obtained in Examples 14 to 19 and Comparative Examples 7 to 12, the IV value was measured using an IV meter (manufactured by KANSAI PAINT CO., LTD.) and flip-flop properties of the coating films were evaluated. The coating films having the IV value of not less than 220 were rated "Pass". The appearance of the respective multilayer coating films was evaluated by visual inspection. As a result, all multilayer coating films exhibited good appearance.

Table 4

| | | Examples | 14 | 15 | 16 | 17 | 18 | 19 |
|---|---|---|---|---|---|---|---|---|
| | Aqueous resin dispersion No. | | 20 | 21 | 22 | 23 | 24 | 25 |
| Aqueous resin dispersion | Monomer mixed solution A | MMA | 35 | 55 | 32 | 30 | 55 | 60 |
| | | ST | - | - | 10 | - | - | - |
| | | nBA | - | 40 | - | - | 30 | 40 |
| | | EA | 65 | - | 58 | 75 | - | - |
| | | MAA | - | - | 10 | 10 | - | 10 |
| | | AA | 10 | 10 | - | - | 20 | - |
| | | 2HEMA | - | 20 | - | - | 20 | - |
| | | 2HEA | 15 | - | 15 | 10 | - | 15 |
| | | Acid value | 63 | 63 | 52 | 52 | 125 | 52 |
| | | Hydroxyl group value | 58 | 69 | 58 | 39 | 69 | 58 |
| | Monomer mixed solution B | MMA | 115 | 68 | 30 | 50 | 89 | 40 |
| | | ST | - | 20 | 20 | - | - | - |
| | | nBA | 80 | 100 | - | - | 100 | - |
| | | EA | - | - | 140 | 135 | - | 139 |
| | | MAA | - | - | - | 5 | - | 1 |
| | | AA | 1 | 3 | - | - | 2 | - |
| | | 2HEMA | - | 20 | - | - | 20 | - |
| | | 2HEA | 15 | - | 21 | 21 | - | 21 |
| | | FA-2 | - | - | - | - | - | 10 |
| | | Acid value | 4 | 11 | 0 | 15 | 7 | 3 |
| | | Hydroxyl group value | 34 | 41 | 48 | 48 | 41 | 61 |
| Evaluation of coating film | Flip-flop properties (IV value) | | 231 | 228 | 222 | 224 | 246 | 226 |

MMA: methyl methacrylate, ST: styrene, nBA: n-butyl acrylate,
EA: ethyl acrylate, MAA: methacrylic acid, AA: acrylic acid,
2HEMA: 2-hydroxyethyl metacrylate, 2HEA: 2-hydroxyethyl acrylate
FA-2: PLACCEL FA-2 (long-chain hydroxyl group-containing monomer, manufactured by DAICEL CHEMICAL INDUSTRIES, LTD.)

Table 5

| | | | 7 | 8 | 9 | 10 | 11 | 12 |
|---|---|---|---|---|---|---|---|---|
| | Comparative Examples | | 7 | 8 | 9 | 10 | 11 | 12 |
| | Aqueous resin dispersion No. | | 26 | 27 | 28 | 29 | 30 | 31 |
| Aqueous resin dispersion | Monomer mixed solution for first stage | MMA | 115 | 68 | 30 | 50 | 89 | 40 |
| | | ST | - | 20 | 20 | - | - | - |
| | | nBA | 80 | 100 | - | - | 100 | - |
| | | EA | - | - | 140 | 135 | - | 139 |
| | | MAA | - | - | - | 5 | - | 1 |
| | | AA | 1 | 3 | - | - | 2 | - |
| | | 2HEMA | - | 20 | - | - | 20 | - |
| | | 2HEA | 15 | - | 21 | 21 | - | 21 |
| | | FA-2 | - | - | - | - | - | 10 |
| | | Acid value | 4 | 11 | 0 | 15 | 7 | 3 |
| | | Hydroxyl group value | 34 | 41 | 48 | 48 | 41 | 61 |
| | Monomer mixed solution for second stage | MMA | 35 | 55 | 32 | 30 | 55 | 60 |
| | | ST | - | - | 10 | - | - | - |
| | | nBA | - | 40 | - | - | 30 | 40 |
| | | EA | 65 | - | 58 | 75 | - | - |
| | | MAA | - | - | 10 | 10 | - | 10 |
| | | AA | 10 | 10 | - | - | 20 | - |
| | | 2HEMA | - | 20 | - | - | 20 | - |
| | | 2HEA | 15 | - | 15 | 10 | - | 15 |
| | | Acid value | 63 | 63 | 52 | 52 | 125 | 52 |
| | | Hydroxyl group value | 58 | 69 | 58 | 39 | 69 | 58 |
| Evaluation of coating film | Flip-flop properties (IV value) | | 207 | 206 | 203 | 201 | 211 | 202 |

MMA: methyl methacrylate, ST: styrene, nBA: n-butyl acrylate,
EA: ethyl acrylate, MAA: methacrylic acid, AA: acrylic acid,
2HEMA: 2-hydroxyethyl metacrylate, 2HEA: 2-hydroxyethyl acrylate
FA-2: PLACCEL FA-2(long-chain hydroxyl group-containing monomer, manufactured by DAICEL CHEMICAL INDUSTRIES, LTD.)

As is apparent from the results shown in Table 4 and Table 5, since all aqueous coating compositions of Examples 14 to 19 contain an aqueous resin dispersion synthesized through predetermined processes, the resulting coating films exhibit good visual appearance and remarkably high flip-flop properties. But it was also been found that the resulting coating films exhibit poor flip-flop properties when using an aqueous resin dispersion obtained by a conventional emulsion polymerization method.

[Production Example 35: Production of aqueous resin dispersion 32]

In a reaction vessel, 350 parts of water was charged and then heated to 75°C. While stirring, 0.5 parts of APS (ammonium persulfate) as a polymerization initiator was charged and a monomer mixed solution A (acid value: 63, hydroxyl group value: 58) composed of 35.0 parts of methyl methacrylate, 65.0 parts of ethyl acrylate, 15.0 parts of 2-hydroxyethyl acrylate and 10.0 parts of acrylic acid was added dropwise over 5 hours. While adding dropwise the monomer, a solution prepared by dissolving 0.3 parts of APS in 5 parts of water was simultaneously added dropwise. After the completion of the dropwise addition, the reaction was further continued at 80°C for 2 hours to obtain an

aqueous solution resin for emulsion polymerization.

Then, in the reaction vessel, 360 parts of the aqueous solution resin for emulsion polymerization, 400 parts of water and 1 part of New Coal 293 (manufactured by Nippon Nyukazai Co., Ltd.) were charged and, after the mixture was heated with stirring and reached 75°C, a solution prepared by dissolving 5% by weight of a monomer mixed solution B (acid value: 4, hydroxyl group value: 34) composed of 112.0 parts of methyl methacrylate, 77.0 parts of n-butyl acrylate, 6.0 parts of diacetone acrylamide, 15.0 parts of 2-hydroxyethyl acrylate and 1.0 parts of acrylic acid; and 0.5 parts of ammonium persulfate, in 5 parts of water was charged and stirred for 20 minutes. 95% by weight of the remaining monomer mixed solution B was added dropwise at 80°C over 2 hours and, after the completion of the dropwise addition, the mixture was maintained at 80 to 85°C for 1 hour and then cooled.

After cooling, a mixed solution of 3 parts of dimethylaminoethanol and 30 parts of water was charged to obtain an aqueous resin dispersion 32 having a nonvolatile content of 30% by weight.

[Production Example 36: Production of aqueous resin dispersion 33]

In the same manner as in Production Example 35, except that the formulation of the polymerizable unsaturated monomer mixed solution B was replaced by the formulation shown in Table 6 and the amount of dihydrazide adipate was replaced by 5 parts, an aqueous resin dispersion 33 was obtained. The acid value and hydroxyl group value of the monomer mixed solution B are shown in Table 6.

[Production Examples 37 to 41: Production of aqueous resin dispersions 34 to 38]

In the same manner as in Production Example 35, except that the formulations of the polymerizable unsaturated monomer mixed solutions B was replaced by the formulation shown in Table 6 and dihydrazide adipate was not charged, aqueous resin dispersions 34 to 38 were obtained. The acid value and hydroxyl group value of the respective monomer mixed solutions B are shown in Table 6.

[Examples 20 to 26]

In the same manner as in Example 14, except that aqueous resin dispersions 32 to 38 were used in place of the aqueous resin dispersion 20, aqueous coating compositions 32 to 38 were obtained. In the same manner as in Example 14, the aqueous coating compositions were diluted. Further, in the same manner as in Example 14, multilayer coating films were obtained.

With respect to the multilayer coating films obtained in Examples 20 to 26, the IV value was measured using an IV meter (manufactured by KANSAI PAINT CO., LTD.) and flip-flop properties of the coating films were evaluated. The coating films having the IV value of not less than 220 were rated "Pass". The appearance of the respective multilayer coating films was evaluated by visual inspection. As a result, all multilayer coating films exhibited good appearance.

Table 6

| | | Examples | 20 | 21 | 22 | 23 | 24 | 25 | 26 |
|---|---|---|---|---|---|---|---|---|---|
| | Aqueous resin dispersion No. | | 32 | 33 | 34 | 35 | 36 | 37 | 38 |
| Aqueous resin dispersion | Monomer mixed solution A | MMA | 35 | 35 | 35 | 35 | 35 | 35 | 35 |
| | | ST | - | - | - | - | - | - | - |
| | | nBA | - | - | - | - | - | - | - |
| | | EA | 65 | 65 | 65 | 65 | 65 | 65 | 65 |
| | | MAA | - | - | - | - | - | - | - |
| | | AA | 10 | 10 | 10 | 10 | 10 | 10 | 10 |
| | | 2HEMA | - | - | - | - | - | - | - |
| | | 2HEA | 15 | 15 | 15 | 15 | 15 | 15 | 15 |
| | | Acid value | 63 | 63 | 63 | 63 | 63 | 63 | 63 |
| | | Hydroxyl group value | 58 | 58 | 58 | 58 | 58 | 58 | 58 |
| | Monomer mixed solution B | MMA | 112 | 63 | 30 | 86 | 40 | 87 | 61 |
| | | ST | - | 20 | 20 | - | - | - | 20 |
| | | nBA | 77 | 95 | - | 100 | - | 97 | 95 |
| | | EA | - | - | 140 | - | 140 | - | - |
| | | MAA | - | - | - | - | 1 | 1 | - |
| | | AA | 1 | 3 | - | 4 | - | - | 5 |
| | | 2HEMA | - | 20 | - | - | - | 20 | 20 |
| | | 2HEA | 15 | - | 15 | 15 | 17 | - | - |
| | | FA-2 | - | - | - | - | 10 | - | - |
| | | DAAAm | 6 | 10 | - | - | - | - | - |
| | | KBM-502 | - | - | 6 | - | - | - | - |
| | | KBM-503 | - | - | - | 6 | 3 | - | - |
| | | N-MAM | - | - | - | - | - | 6 | - |
| | | GMA | - | - | - | - | - | - | 10 |
| | | Acid value | 4 | 11 | 0 | 14 | 3 | 3 | 18 |
| | | Hydroxyl group value | 34 | 41 | 34 | 34 | 39 | 41 | 41 |
| Evaluation of coating film | Flip-flop properties (IV value) | | 253 | 260 | 254 | 253 | 248 | 256 | 250 |

The abbreviations in Table 6 are as shown below. Other abbreviations are the same as that in Tables 4 and 5.
DAAAm: Diacetone acrylamide
KBM-502: Alkoxysilyl group-containing monomer manufactured by Shin-Etsu Chemical Co., Ltd.
KBM-503: Alkoxysilyl group-containing monomer manufactured by Shin-Etsu Chemical Co., Ltd.
N-MAM: N-Methylol acrylamide
GMA: Glycidyl methacrylate

As is apparent from the results shown in Table 6, since all aqueous coating compositions of Examples 20 to 26 contain an aqueous resin dispersion synthesized through predetermined processes, the resulting coating films exhibit good visual appearance and remarkably high flip-flop properties. Particularly, the coating films of Examples 20 to 24 using diacetoneacrylamide or a hydrolyzable silyl group-containing monomer as a cross-linkable monomer exhibited remarkably good appearance.

INDUSTRIAL APPLICABILITY

The aqueous coating composition of the present invention contains an aqueous resin dispersion synthesized through predetermined processes and, therefore, the resulting coating film has improved flip-flop properties.

Furthermore, according to the present invention, excellent solvent resistance can be imparted by using a cross-linkable monomer as a copolymerization component in the preparation of an aqueous solution resin for emulsion polymerization and/or a core resin. As a result, a multilayer coating film having excellent appearance can be obtained.

## Claims

1. An aqueous coating composition comprising:

    an aqueous resin dispersion which is obtained by solution-polymerizing a monomer mixed solution A having an acid value of 30 to 150 and a hydroxyl group value of 10 to 100 in an organic solvent, thereby to synthesize a copolymer solution, converting the copolymer solution into an aqueous solution, removing the organic solvent under reduced pressure to obtain an aqueous solution resin for emulsion polymerization, and then emulsion-polymerizing a monomer mixed solution B having an acid value of 20 as an upper limit and a hydroxyl group value of 100 as an upper limit using the aqueous solution resin for emulsion polymerization as a protective colloid, thereby to synthesize a core resin in the protective colloid; and
    a glitter material.

2. The aqueous coating composition according to claim 1, which further contains at least one kind of a urethane-type compound represented by the general formula (1) or (2):

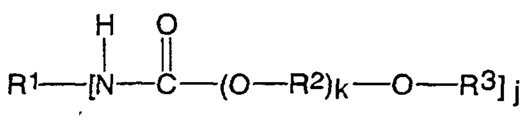 (1)

(in the formula (1), $R^1$, $R^2$ and $R^3$ represent a hydrocarbon groups which may be the same as and different from each other, $R^1$ represents a hydrocarbon group which may have a urethane bond, $R^3$ represents a branched or secondary hydrocarbon group, j represents a number of not less than 1, and k represents a number in a range from 1 to 500),

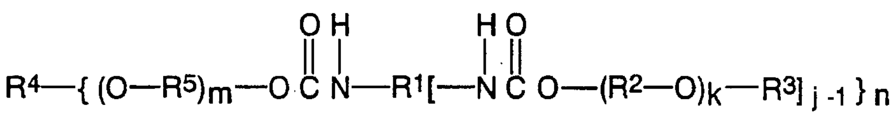 (2)

(in the formula (2), $R^1$, $R^2$, $R^3$, $R^4$ and $R^5$ represent a hydrocarbon groups which may be the same as and different from each other, $R^1$ represents a hydrocarbon group which may have a urethane bond, $R^3$ represents a branched or secondary hydrocarbon group, n represents a number of not less than 2, j represents a number of not less than 2, and k and m each represents a number in a range from 1 to 500), wherein

the solid content of the urethane-type compound is from 0.01 to 20% by weight based on the solid content of the resin in the coating composition.

3. The aqueous coating composition according to claim 1, wherein the monomer mixed solution A and the monomer mixed solution B respectively contain at least one kind of a polymerizable unsaturated monomer selected from the group consisting of (meth)acrylates, styrenic monomers, (meth)acrylonitrile and (meth)acrylamide.

4. The aqueous coating composition according to claim 1, wherein a weight Aw of the monomer mixed solution A

and a weight Bw of the monomer mixed solution B satisfy the following relationship:

$$10/100 \leq Aw/(Aw + Bw) \leq 50/100.$$

**5.** The aqueous coating composition according to claim 1, wherein the monomer mixed solution A further contains a cross-linkable monomer as a copolymerization component.

**6.** The aqueous coating composition according to claim 1, wherein the monomer mixed solution B further contains a cross-linkable monomer as a copolymerization component.

**7.** The aqueous coating composition according to claim 1, which further contains a polyether polyol having a primary hydroxyl group in the number of not less than 0.02 on average in a molecule, a number average molecular weight of 300 to 3,000 and a water tolerance value of not less than 2.0.

**8.** The aqueous coating composition according to claim 7, wherein the polyether polyol has at least one primary hydroxyl group in a molecule and a hydroxyl group value of 30 to 700.

**9.** A method for formation of a multilayer coating film, which comprises: coating an aqueous base coating material on a material to be coated to form a base coating film; coating a clear coating material on the base coating film to form a clear coating film; and curing both of the coating films with heating, wherein

the aqueous base coating material is the aqueous coating composition according to claim 1.

**10.** A multilayer coating film formed by the method according to claim 9.

**11.** An aqueous coating composition comprising:

an aqueous resin dispersion which is obtained by aqueous solution-polymerizing a monomer mixed solution A having an acid value of 30 to 150 and a hydroxyl group value of 10 to 100 in water to obtain an aqueous solution resin for emulsion polymerization, and then
emulsion-polymerizing a monomer mixed solution B having an acid value of 20 as an upper limit and a hydroxyl group value of 100 as an upper limit using the aqueous solution resin for emulsion polymerization as a protective colloid, thereby to synthesize a core resin in the protective colloid; and
a glitter material.

**12.** The aqueous coating composition according to claim 11, which further contains at least one kind of a urethane-type compound represented by the general formula (1) or (2):

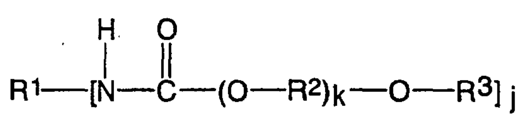

(1)

(in the formula (1), $R^1$, $R^2$ and $R^3$ represent a hydrocarbon groups which may be the same as and different from each other, $R^1$ represents a hydrocarbon group which may have a urethane bond, $R^3$ represents a branched or secondary hydrocarbon group, j represents a number of not less than 1, and k represents a number in a range from 1 to 500),

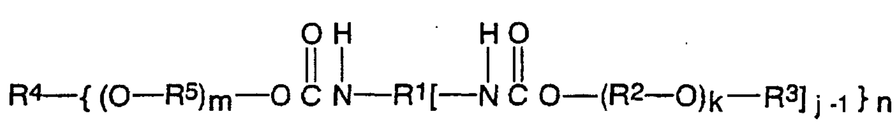

(2)

( in the formula (2), $R^1$, $R^2$, $R^3$, $R^4$ and $R^5$ represent a hydrocarbon groups which may be the same as and different from each other, $R^1$ represents a hydrocarbon group which may have a urethane bond, $R^3$ represents a branched or secondary hydrocarbon group, n represents a number of not less than 2, j represents a number of not less than 2, and k and m each represents a number in a range from 1 to 500), wherein

the solid content of the urethane-type compound is from 0.01 to 20% by weight based on the solid content of the resin in the coating composition.

**13.** The aqueous coating composition according to claim 11, wherein the monomer mixed solution A and the monomer mixed solution B respectively contain at least one kind of a polymerizable unsaturated monomer selected from the group consisting of (meth)acrylates, styrenic monomers, (meth)acrylonitrile and (meth)acrylamide.

**14.** The aqueous coating composition according to claim 11, wherein a weight Aw of the monomer mixed solution A and a weight Bw of the monomer mixed solution B satisfy the following relationship:

$$10/100 \leq Aw/(Aw + Bw) \leq 50/100.$$

**15.** The aqueous coating composition according to claim 11, wherein the monomer mixed solution A further contains a cross-linkable monomer as a copolymerization component.

**16.** The aqueous coating composition according to claim 11, wherein the monomer mixed solution B further contains a cross-linkable monomer as a copolymerization component.

**17.** The aqueous coating composition according to claim 11, which further contains a polyether polyol having a primary hydroxyl group in the number of not less than 0.02 on average in a molecule, a number average molecular weight of 300 to 3,000 and a water tolerance value of not less than 2.0.

**18.** The aqueous coating composition according to claim 17, wherein the polyether polyol has at least one primary hydroxyl group in a molecule and a hydroxyl group value of 30 to 700.

**19.** A method for formation of a multilayer coating film, which comprises: coating an aqueous base coating material on a material to be coated to form a base coating film; coating a clear coating material on the base coating film to form a clear coating film; and curing both of the coating films with heating, wherein

the aqueous base coating material is the aqueous coating composition according to claim 11.

**20.** A multilayer coating film formed by the method according to claim 19.

## INTERNATIONAL SEARCH REPORT

International application No.
PCT/JP03/00385

A. CLASSIFICATION OF SUBJECT MATTER
Int.Cl[7] C09D5/02, 5/29, 133/04

According to International Patent Classification (IPC) or to both national classification and IPC

B. FIELDS SEARCHED
Minimum documentation searched (classification system followed by classification symbols)
Int.Cl[7] C09D5/02, 5/29, 133/04

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | GB 2360717 A (Nippon Paint Co., Ltd.),<br>03 October, 2001 (03.10.01),<br>Full text<br>& JP 2001-311035 A & US 2002/0009550 A | 1-20<br>1-20 |
| Y | Kagaku Daijiten Henshu Iinkai "Kagaku Daijiten 8", Kyoritsu Shuppan Co., Ltd., 15 August, 1962 (15.08.62), page 657 | 1-20 |
| Y | Kansai Paint Co., Ltd. Gijutsu Honbu, "Yasashi Gijutsu Kaisetsu Series 5 Suisei Toryo no Kiso to Saishin Gijutsu", Coating Media, 01 September, 2001 (01.09.01), pages 89 to 105 | 2,12 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 March, 2003 (14.03.03) | 25 March, 2003 (25.03.03) |
| Name and mailing address of the ISA/<br>Japanese Patent Office<br>Facsimile No. | Authorized officer<br><br>Telephone No. |

Form PCT/ISA/210 (second sheet) (July 1998)

**INTERNATIONAL SEARCH REPORT**

International application No.
PCT/JP03/00385

The monomers specified in the description as examples of the monomers in the liquid monomer mixtures (A) and (B) are limited to monomers consisting mainly of acrylic monomers.

The brightening-agent-dispersing properties in the coating material of the resin obtained by polymerizing monomers and the flip-flop characteristics are influenced also by the chemical structures and functional groups of the monomer units constituting the resin, which interacts with the brightening agent.

For these reasons, it cannot be presumed that a resin obtained by polymerizing monomers which are not monomers consisting mainly of one or more acrylic monomers has the same flip-flop characteristics as a resin obtained by polymerizing monomers consisting mainly of one or more acrylic monomers.

Consequently, it can be said that, among the water-based coating compositions of claims 1-20, those containing an aqueous resin dispersion containing a resin obtained by polymerizing monomers which are not monomers consisting mainly of one or more acrylic monomers are not fully supported by the description.

Therefore, an international search report was made with respect to the water-based coating compositions fully supported by the description, i.e., those containing an aqueous dispersion of a resin obtained by polymerizing monomers consisting mainly of one or more acrylic monomers.

Form PCT/ISA/210 (extra sheet) (July 1998)